(19) Europäisches Patentamt
European Patent Office
Office européen des brevets

(11) **EP 4 615 108 A1**

(12) **EUROPEAN PATENT APPLICATION**
published in accordance with Art. 153(4) EPC

(43) Date of publication:
**10.09.2025 Bulletin 2025/37**

(21) Application number: **23896502.4**

(22) Date of filing: **13.11.2023**

(51) International Patent Classification (IPC):
**H04W 72/0453** (2023.01)

(52) Cooperative Patent Classification (CPC):
**H04W 72/0453; H04W 72/23**

(86) International application number:
**PCT/CN2023/131255**

(87) International publication number:
**WO 2024/114350 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.12.2022 CN 202211538153**

(71) Applicant: **Huawei Technologies Co., Ltd.
Shenzhen, Guangdong 518129 (CN)**

(72) Inventors:
• **RUAN, Wei
Shenzhen, Guangdong 518129 (CN)**

• **YAN, Yongli
Shenzhen, Guangdong 518129 (CN)**
• **HE, Shijian
Shenzhen, Guangdong 518129 (CN)**
• **ZHANG, Xiang
Shenzhen, Guangdong 518129 (CN)**
• **HAN, Yunfeng
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, APPARATUS AND SYSTEM**

(57) This application provides a communication method, apparatus, and system, and belongs to the field of communication technologies, to improve spectrum resource utilization of an unlicensed frequency band. In this method, when a bandwidth of a Wi-Fi channel increases by a power of 2, for a remaining spectrum resource in the unlicensed frequency band, for example, a frequency segment other than a frequency segment used by wireless fidelity Wi-Fi, a bandwidth of the spectrum resource generally cannot meet a minimum bandwidth requirement of the Wi-Fi channel, in other words, such spectrum resource part cannot be used by Wi-Fi. Therefore, a first device may send first data to a second device on a frequency domain resource of such part, to improve spectrum resource utilization of the unlicensed frequency band.

FIG. 3

## Description

This application claims priority to Chinese Patent Application No. 202211538153.2, filed with the China National Intellectual Property Administration on December 2, 2022 and entitled "COMMUNICATION METHOD, APPARATUS, AND SYSTEM", which is incorporated herein by reference in its entirety.

## TECHNICAL FIELD

This application relates to the communication field, and in particular, to a communication method, apparatus, and system.

## BACKGROUND

At present, wireless fidelity (wireless fidelity, Wi-Fi), as a convenient local area network wireless communication mode, has been widely used in innumerable homes. It is stipulated in the institute of electrical and electronics engineers (institute of electrical and electronics engineers, IEEE) 802.11 series protocols that, on an unlicensed frequency band (industrial scientific medical, ISM), there are at least 64 subcarriers (subcarrier, SC) on a Wi-Fi channel, and a minimum bandwidth of an ISM 5G frequency segment channel is 20 MHz. In this case, when a quantity of subcarriers on the channel increases, a bandwidth of the channel also increases proportionally. For example, the bandwidth of the channel increases by a power of 2, to be specific, the bandwidth of the channel may be 20 MHz, 40 MHz, 80 MHz, 160 MHz, and 320 MHz.

However, if the bandwidth of the Wi-Fi channel increases by a power of 2, spectrum resources of the unlicensed frequency band cannot be fully used, causing a waste of spectrum resources.

## SUMMARY

Embodiments of this application provide a communication method, apparatus, and system, to improve spectrum resource utilization of an unlicensed frequency band.

To achieve the foregoing objective, this application uses the following technical solutions:

According to a first aspect, a communication method is provided. The method includes: A first device obtains first data, and sends the first data to a second device on a first channel in an unlicensed frequency band, where a frequency segment in which the first channel is located is a frequency segment other than a frequency segment used by wireless fidelity Wi-Fi in the unlicensed frequency band.

It can be learned from the method according to the first aspect that, when a bandwidth of a Wi-Fi channel increases by a power of 2, for a remaining spectrum resource in the unlicensed frequency band, for example, the frequency segment other than the frequency segment used by wireless fidelity Wi-Fi, a bandwidth of the spectrum resource generally cannot meet a minimum bandwidth requirement of the Wi-Fi channel, in other words, such spectrum resource part cannot be used by Wi-Fi. Therefore, the first device may send the first data to the second device on a frequency domain resource of such part, to improve spectrum resource utilization of the unlicensed frequency band.

The first data may be Wi-Fi-related data. For example, the first data may be data in a Wi-Fi format or a Wi-Fi frame structure. In this case, the first data may be Wi-Fi data or non-Wi-Fi data. This is not limited. For another example, the first data may alternatively be Wi-Fi data.

In a possible design solution, a bandwidth of the first channel is less than 20 MHz, to fully use the spectrum resource that cannot be used by Wi-Fi, so as to further improve spectrum resource utilization. In addition, because the bandwidth of the first channel is less than 20 MHz, the first channel may also be referred to as a narrowband, or may be named in any other possible manner. This is not limited.

Optionally, the bandwidth of the first channel is any one of the following: 1 MHz, 5 MHz, 10 MHz, or 15 MHz, to flexibly adapt to various transmission requirements. For example, 1 MHz or 5 MHz may be selected when a transmission rate requirement is low. For another example, 10 MHz or 15 MHz may be selected when a transmission rate needs to be ensured.

For example, if the bandwidth of the first channel is 1 MHz or 5 MHz, the frequency segment in which the first channel is located is any one of the following: 5150 MHz to 5155 MHz, 5155 MHz to 5160 MHz, 5160 MHz to 5165 MHz, 5165 MHz to 5170 MHz, 5330 MHz to 5335 MHz, 5335 MHz to 5340 MHz, 5340 MHz to 5345 MHz, 5345 MHz to 5350 MHz, 5470 MHz to 5475 MHz, 5475 MHz to 5480 MHz, 5480 MHz to 5485 MHz, 5485 MHz to 5490 MHz, 5710 MHz to 5715 MHz, 5715 MHz to 5720 MHz, 5720 MHz to 5725 MHz, 5725 MHz to 5730 MHz, 5730 MHz to 5735 MHz, 5835 MHz to 5840 MHz, 5840 MHz to 5845 MHz, and 5845 MHz to 5850 MHz. That is, the remaining spectrum resource in the unlicensed frequency band may be divided into more bandwidths at a granularity of 5 MHz, to provide services for more users.

For another example, if the bandwidth of the first channel is 10 MHz, the frequency segment in which the first channel is located is any one of the following: 5150 MHz to 5160 MHz, 5155 MHz to 5165 MHz, 5160 MHz to 5170 MHz, 5330 MHz to 5340 MHz, 5335 MHz to 5345 MHz, 5340 MHz to 5350 MHz, 5470 MHz to 5480 MHz, 5480 MHz to 5490 MHz, 5710 MHz to 5720 MHz, 5715 MHz to 5725 MHz, 5720 MHz to 5730 MHz, 5725 MHz to 5735 MHz, 5835 MHz to 5845 MHz, and 5840 MHz to 5850 MHz. That is, the remaining spectrum resource in the unlicensed frequency band may be divided into a plurality of bandwidths at a granularity of 10 MHz, to balance the transmission rate and a quantity of served users.

For still another example, if the bandwidth of the first channel is 15 MHz, the frequency segment in which the first channel is located is any one of the following: 5150 MHz to 5165 MHz, 5155 MHz to 5170 MHz, 5330 MHz to 5345 MHz, 5335 MHz to 5350 MHz, 5470 MHz to 5485 MHz, 5475 MHz to 5490 MHz, 5710 MHz to 5725 MHz, 5715 MHz to 5730 MHz, 5720 MHz to 5735 MHz, and 5835 MHz to 5850 MHz. That is, the remaining spectrum resource in the unlicensed frequency band may be divided into a plurality of bandwidths at a granularity of 15 MHz, to ensure the transmission rate.

In a possible design solution, the method according to the first aspect may further include: The first device broadcasts a first information element, to receive a second information element returned by the second device for the first information element. The first information element indicates a channel supported by the first device, and the channel supported by the first device includes the first channel. The second information element indicates that the second device requests to access the first channel. That is, the second device may directly access the first channel, to quickly establish interaction with the first device, so as to reduce a communication delay.

Optionally, the method according to the first aspect may further include: The first device broadcasts a third information element, where the third information element indicates that a device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band. In other words, when data transmission needs to be performed in the frequency segment used by Wi-Fi, the first device may indicate, in a broadcast manner, the corresponding device to switch from a frequency segment used by non-Wi-Fi to the frequency segment used by Wi-Fi, that is, switch from the first channel to the second channel, to meet an actual transmission requirement.

Further, the third information element may include at least one of the following: channel identification information, bandwidth information, or a switch count. The channel identification information is used to identify the second channel, the bandwidth information indicates the bandwidth of the second channel, and the switch count indicates a moment of switching to the second channel, to ensure that the second device can switch to a specified channel, that is, the second channel, in time.

Optionally, the method according to the first aspect may further include: The first device sends a fourth information element to the second device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Alternatively, optionally, the method according to the first aspect may further include: The first device receives a fourth information element from the second device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

It can be learned that, when switching from the frequency segment used by the non-Wi-Fi to the frequency segment used by the Wi-Fi is implemented in a unicast manner, that is, when switching from the first channel to the second channel, the switching may be triggered by the second device, or may be triggered by the first device, to implement more flexible channel switching.

Further, the fourth information element may include at least one of the following: channel identification information, bandwidth information, or a switch count. The channel identification information is used to identify the second channel, the bandwidth information indicates the bandwidth of the second channel, and the switch count indicates a moment of switching to the second channel. Similarly, the foregoing information may be carried in one fourth information element together to improve transmission and channel switching efficiency, or may be carried in respective corresponding fourth information elements to improve transmission flexibility and channel switching flexibility.

Optionally, the bandwidth of the second channel is greater than the bandwidth of the first channel. Therefore, if interference with the second channel is less than or equal to interference with the first channel, and/or a distance of transmission performed using the second channel is less than or equal to a distance of transmission performed using the first channel, or a delay in which transmission is performed on the second channel is less than or equal to a delay in which transmission is performed on the first channel, the second channel may be preferentially switched to improve the transmission rate.

In a possible design solution, the method according to the first aspect may further include: The first device broadcasts a first information element, to receive a second information element returned by the second device for the first information element, where the first information element indicates a channel supported by the first device, the channel supported by the first device includes a second channel in the unlicensed frequency band, a bandwidth of the second channel is different from the bandwidth of the first channel, a frequency segment in which the second channel is located is the frequency segment used by Wi-Fi in the unlicensed frequency band, and the second information element indicates that the second device requests to access the second channel.

Optionally, the method according to the first aspect may further include: The first device broadcasts a third information element, where the third information element indicates that a device needs to switch to the first channel. In other words, even if the second device first accesses the second channel, the second device may switch to the first channel in a broadcast manner, to ensure that a spectrum resource can always be efficiently used.

Further, the third information element may include at least one of the following: channel identification information, bandwidth information, or a switch count. The channel identification information is used to identify the first channel, the bandwidth information indicates the bandwidth of the first channel, and the switch count indicates a moment of switching to the first channel, to ensure that the second device can switch to a specified channel, that is, the first channel, in time.

Optionally, the method according to the first aspect may further include: The first device sends a fourth information element to the first device, where the fourth information element indicates that the first device needs to switch to the first channel.

Alternatively, optionally, the method according to the first aspect may further include: The first device receives a fourth information element from the second device, where the fourth information element indicates that the first device needs to switch to the first channel.

It can be learned that, similar to the foregoing implementation, when switching from the frequency segment used by Wi-Fi to the frequency segment used by non-Wi-Fi is implemented in a unicast manner, that is, when switching from the second channel to the first channel, the switching may be triggered by the second device, or may be triggered by the first device, to implement more flexible channel switching.

Further, the fourth information element may include at least one of the following: channel identification information, bandwidth information, or a switch count. The channel identification information is used to identify the first channel, the bandwidth information indicates the bandwidth of the first channel, and the switch count indicates a moment of switching to the first channel. Similarly, the foregoing information may be carried in one fourth information element together to improve transmission and channel switching efficiency, or may be carried in respective corresponding fourth information elements to improve transmission flexibility and channel switching flexibility.

Optionally, although the bandwidth of the second channel is greater than the bandwidth of the first channel, when interference with the second channel is greater than interference with the first channel, and/or a distance of transmission performed using the second channel is greater than a distance of transmission performed using the first channel, the first channel also needs to be preferentially switched to, to ensure transmission reliability and delay.

In a possible design solution, the first information element is carried in a first beacon frame, and the first beacon frame is a frame sent in a broadcast manner, that is, the first information element may be broadcast by reusing an existing broadcast frame, to reduce implementation difficulty.

In a possible design solution, the third information element is carried in a second beacon frame, and the second beacon frame is a frame sent in a broadcast manner, that is, the third information element may be broadcast by reusing an existing broadcast frame, to reduce implementation difficulty.

In a possible design solution, the fourth information element is at least one of the following: a channel switch announcement CSA information element or a wideband channel switching WBCS information element. The CSA information element and the WBCS information element are information elements sent in a unicast manner, that is, the fourth information element may be sent by reusing an existing unicast information element, to reduce implementation difficulty.

In a possible design solution, a bandwidth and a symbol of the first channel meet the following relationship: A narrower bandwidth of the first channel indicates a longer symbol of the first channel. For example, a quantity of subcarriers, a symbol, and a bandwidth of the first channel meet the following relationship:

$$\begin{cases} \alpha = \dfrac{BW_{wb}}{BW_{nb}} \\ CP = \alpha \times \gamma \times \dfrac{N_{sc}}{BW_{wb}} \\ OFDM_{wop} = \alpha \times \dfrac{N_{sc}}{BW_{wb}} \\ OFDM_{wp} = \alpha \times \left( \gamma \times \dfrac{N_{sc}}{BW_{wb}} + \dfrac{N_{sc}}{BW_{wb}} \right) \end{cases},$$

where $BW_{wb}$ is a reference bandwidth, $BW_{nb}$ is the bandwidth of the first channel, the reference bandwidth is greater than the bandwidth of the first channel, $CP$ is a cyclic prefix, a value of $y$ is greater than 0 and less than 1, $N_{sc}$ is the quantity of subcarriers on the first channel, $OFDM_{wop}$ indicates that the symbol of the first channel is a symbol that does not include the cyclic prefix, and $OFDM_{wp}$ indicates that the symbol of the first channel is a symbol that includes the cyclic prefix.

It can be learned that, if the bandwidth and the symbol of the first channel change in a proportional manner, for example, if the bandwidth of the first channel decreases by one time, and the symbol length of the first channel correspondingly increases by one time, the quantity of subcarriers on the first channel remains unchanged, or a quantity of frequency domain resources that can be scheduled is not affected. Certainly, the bandwidth and the symbol of the first channel may alternatively change in a non-proportional manner. For example, the bandwidth of the first channel decreases by two times, and the symbol length of the first channel correspondingly increases by one time. This is not limited.

According to a second aspect, a communication method is provided. The method includes: A second device receives first data from a first device on a first channel in an unlicensed frequency band, and processes the first data. A frequency segment in which the first channel is located is a frequency segment other than a frequency segment used by wireless fidelity Wi-Fi in the unlicensed frequency band.

In a possible design solution, a bandwidth of the first channel is less than 20 MHz.

Optionally, the bandwidth of the first channel is any one of the following: 1 MHz, 5 MHz, 10 MHz, or 15 MHz.

For example, if the bandwidth of the first channel is 1 MHz or 5 MHz, the frequency segment in which the first channel is located is any one of the following: 5150 MHz to 5155 MHz, 5155 MHz to 5160 MHz, 5160 MHz to 5165 MHz, 5165 MHz to 5170 MHz, 5330 MHz to 5335 MHz, 5335 MHz to 5340 MHz, 5340 MHz to 5345 MHz, 5345 MHz to 5350 MHz, 5470 MHz to 5475 MHz, 5475 MHz to 5480 MHz, 5480 MHz to 5485 MHz, 5485 MHz to 5490 MHz, 5710 MHz to 5715 MHz, 5715 MHz to 5720 MHz, 5720 MHz to 5725 MHz, 5725 MHz to 5730 MHz, 5730 MHz to 5735 MHz, 5835 MHz to 5840 MHz, 5840 MHz to 5845 MHz, and 5845 MHz to 5850 MHz.

For another example, if the bandwidth of the first channel is 10 MHz, the frequency segment in which the first channel is located is any one of the following: 5150 MHz to 5160 MHz, 5155 MHz to 5165 MHz, 5160 MHz to 5170 MHz, 5330 MHz to 5340 MHz, 5335 MHz to 5345 MHz, 5340 MHz to 5350 MHz, 5470 MHz to 5480 MHz, 5480 MHz to 5490 MHz, 5710 MHz to 5720 MHz, 5715 MHz to 5725 MHz, 5720 MHz to 5730 MHz, 5725 MHz to 5735 MHz, 5835 MHz to 5845 MHz, and 5840 MHz to 5850 MHz.

For still another example, if the bandwidth of the first channel is 15 MHz, the frequency segment in which the first channel is located is any one of the following: 5150 MHz to 5165 MHz, 5155 MHz to 5170 MHz, 5330 MHz to 5345 MHz, 5335 MHz to 5350 MHz, 5470 MHz to 5485 MHz, 5475 MHz to 5490 MHz, 5710 MHz to 5725 MHz, 5715 MHz to 5730 MHz, 5720 MHz to 5735 MHz, and 5835 MHz to 5850 MHz.

In a possible design solution, the method according to the second aspect may further include: The second device receives a first information element, and sends a second information element to the first device based on the first information element. The first information element indicates a channel supported by the first device, and the channel supported by the first device includes the first channel. The second information element indicates that the second device requests to access the first channel.

Optionally, the method according to the second aspect may further include: The second device receives a third information element, where the third information element indicates that a device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Further, the third information element may include at least one of the following: channel identification information, bandwidth information, or a switch count. The channel identification information is used to identify the second channel, the bandwidth information indicates the bandwidth of the second channel, and the switch count indicates a moment of switching to the second channel.

Optionally, the method according to the second aspect may further include: The second device receives a fourth information element from the first device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Alternatively, optionally, the method according to the second aspect may further include: The second device sends a fourth information element to the first device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Further, the fourth information element may include at least one of the following: channel identification information, bandwidth information, or a switch count. The channel identification information is used to identify the second channel, the bandwidth information indicates the bandwidth of the second channel, and the switch count indicates a moment of switching to the second channel.

Optionally, interference with the second channel is less than or equal to interference with the first channel, and/or a distance of transmission performed using the second channel is less than or equal to a distance of transmission performed using the first channel.

In a possible design solution, the method according to the second aspect may further include: The second device receives a first information element, and sends a second information element to the first device based on the first information element. The first information element is used for a channel supported by the first device, the channel supported by the first device includes a second channel in the unlicensed frequency band, a bandwidth of the second channel is different from the bandwidth of the first channel, a frequency segment in which the second channel is located is the frequency segment used by Wi-Fi in the unlicensed frequency band, and the second information element indicates that the second device requests to access the second channel.

Optionally, the method according to the second aspect may further include: The second device receives a third information element, where the third information element indicates that a device needs to switch to the first channel.

Further, the third information element may include at least one of the following: channel identification information, bandwidth information, or a switch count. The channel identification information is used to identify the first channel, the bandwidth information indicates the bandwidth of the first channel, and the switch count indicates a moment of switching to the first channel.

Optionally, the method according to the second aspect may further include: The second device receives a fourth information element from the first device, where the fourth information element indicates that the first device needs to switch to the first channel.

Alternatively, optionally, the method according to the second aspect may further include: The second device sends a fourth information element to the first device, where the fourth information element indicates that the first device needs to switch to the first channel.

Further, the fourth information element may include at least one of the following: channel identification information, bandwidth information, or a switch count. The channel identification information is used to identify the first channel, the bandwidth information indicates the bandwidth of the first channel, and the switch count indicates the moment of switching to the first channel.

Optionally, interference with the second channel is greater than interference with the first channel, and/or a distance of transmission performed using the second channel is greater than a distance of transmission performed using the first channel.

In a possible design solution, the first information element is carried in a first beacon frame, and the first beacon frame is a frame sent in a broadcast manner.

In a possible design solution, the third information element is carried in a second beacon frame, and the second beacon frame is a frame sent in a broadcast manner.

In a possible design solution, the fourth information element is at least one of the following: a channel switch announcement CSA information element or a wideband channel switching WBCS information element, where the CSA information element and the WBCS information element are information elements sent in a unicast manner.

In a possible design solution, a bandwidth and a symbol of the first channel meet the following relationship: A narrower bandwidth of the first channel indicates a longer symbol of the first channel. For example, a quantity of subcarriers, a symbol, and a bandwidth of the first channel meet the following relationship:

$$\begin{cases} \alpha = \dfrac{BW_{wb}}{BW_{nb}} \\ CP = \alpha \times \gamma \times \dfrac{N_{sc}}{BW_{wb}} \\ OFDM_{wop} = \alpha \times \dfrac{N_{sc}}{BW_{wb}} \\ OFDM_{wp} = \alpha \times \left( \gamma \times \dfrac{N_{sc}}{BW_{wb}} + \dfrac{N_{sc}}{BW_{wb}} \right) \end{cases},$$

where

$BW_{wb}$ is a reference bandwidth, $BW_{nb}$ is the bandwidth of the first channel, the reference bandwidth is greater than the bandwidth of the first channel, $CP$ is a cyclic prefix, a value of $\gamma$ is greater than 0 and less than 1, $N_{sc}$ is the quantity of subcarriers on the first channel, $OFDM_{wop}$ indicates that the symbol of the first channel is a symbol that does not include the cyclic prefix, and $OFDM_{wp}$ indicates that the symbol of the first channel is a symbol that includes the cyclic prefix.

In addition, for technical effect of the method according to the second aspect, refer to the technical effect of the method according to the first aspect. Details are not described herein again.

According to a third aspect, a communication method is provided. The method includes: A first device obtains first data, and sends the first data to a second device on a first channel in an unlicensed frequency band, and the second device receives the first data from the first device on the first channel in the unlicensed frequency band, and processes the first data. A frequency segment in which the first channel is located is a frequency segment other than a frequency segment used by wireless fidelity Wi-Fi in the unlicensed frequency band.

In a possible design solution, a bandwidth of the first channel is less than 20 MHz.

Optionally, the bandwidth of the first channel is any one of the following: 1 MHz, 5 MHz, 10 MHz, or 15 MHz.

For example, if the bandwidth of the first channel is 1 MHz or 5 MHz, the frequency segment in which the first channel is located is any one of the following: 5150 MHz to 5155 MHz, 5155 MHz to 5160 MHz, 5160 MHz to 5165 MHz, 5165 MHz to 5170 MHz, 5330 MHz to 5335 MHz, 5335 MHz to 5340 MHz, 5340 MHz to 5345 MHz, 5345 MHz to 5350 MHz, 5470 MHz to 5475 MHz, 5475 MHz to 5480 MHz, 5480 MHz to 5485 MHz, 5485 MHz to 5490 MHz, 5710 MHz to 5715 MHz, 5715 MHz to 5720 MHz, 5720 MHz to 5725 MHz, 5725 MHz to 5730 MHz, 5730 MHz to 5735 MHz, 5835 MHz to 5840 MHz, 5840 MHz to 5845 MHz, and 5845 MHz to 5850 MHz.

For another example, if the bandwidth of the first channel is 10 MHz, the frequency segment in which the first channel is located is any one of the following: 5150 MHz to 5160 MHz, 5155 MHz to 5165 MHz, 5160 MHz to 5170 MHz, 5330 MHz to 5340 MHz, 5335 MHz to 5345 MHz, 5340 MHz to 5350 MHz, 5470 MHz to 5480 MHz, 5480 MHz to 5490 MHz, 5710 MHz to 5720 MHz, 5715 MHz to 5725 MHz, 5720 MHz to 5730 MHz, 5725 MHz to 5735 MHz, 5835 MHz to 5845 MHz, and 5840 MHz to 5850 MHz.

For still another example, if the bandwidth of the first channel is 15 MHz, the frequency segment in which the first channel is located is any one of the following: 5150 MHz to 5165 MHz, 5155 MHz to 5170 MHz, 5330 MHz to 5345 MHz, 5335 MHz to 5350 MHz, 5470 MHz to 5485 MHz, 5475 MHz to 5490 MHz, 5710 MHz to 5725 MHz, 5715 MHz to 5730 MHz, 5720 MHz to 5735 MHz, and 5835 MHz to 5850 MHz.

In a possible design solution, the method according to the third aspect may further include: The first device broadcasts a first information element. The second device receives the first information element, and sends a second information element to the first device based on the first information element. The first device receives the second information element returned by the second device for the first information element. The first information element is used for a channel supported by the first device, and the channel supported by the first device includes the first channel. The second information element indicates that the second device requests to access the first channel.

Optionally, the method according to the third aspect may further include: The first device broadcasts a third information element, and the second device receives the third information element, where the third information element indicates that a device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Further, the third information element may include at least one of the following: channel identification information, bandwidth information, or a switch count. The channel identification information is used to identify the second channel, the bandwidth information indicates the bandwidth of the second channel, and the switch count indicates a moment of switching to the second channel.

Optionally, the method according to the third aspect may further include: The first device sends a fourth information element to the second device, and the second device receives the fourth information element from the first device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Optionally, the method according to the third aspect may further include: The second device sends a fourth information element to the first device, and the first device receives the fourth information element from the second device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Further, the fourth information element may include at least one of the following: channel identification information, bandwidth information, or a switch count. The channel identification information is used to identify the second channel, the bandwidth information indicates the bandwidth of the second channel, and the switch count indicates a moment of switching to the second channel.

Optionally, interference with the second channel is less than or equal to interference with the first channel, and/or a distance of transmission performed using the second channel is less than or equal to a distance of transmission performed using the first channel.

In a possible design solution, the method according to the third aspect may further include: The first device broadcasts a first information element. The second device receives the first information element, and sends a second information element to the first device based on the first information element. The first device receives the second information element returned by the second device for the first information element. The first information element indicates a channel supported by the first device, the channel supported by the first device includes a second channel in the unlicensed frequency band, a bandwidth of the second channel is different from the bandwidth of the first channel, a frequency segment in which the second channel is located is the frequency segment used by Wi-Fi in the unlicensed frequency band, and the second information element indicates that the second device requests to access the second channel.

Optionally, the method according to the third aspect may further include: The first device broadcasts a third information element, and the second device receives the third information element, where the third information element indicates that a device needs to switch to the first channel.

Further, the third information element may include at least one of the following: channel identification information, bandwidth information, or a switch count. The channel identification information is used to identify the first channel, the bandwidth information indicates the bandwidth of the first channel, and the switch count indicates a moment of switching to the first channel.

Optionally, the method according to the third aspect may further include: The first device sends a fourth information element to the first device, and the second device receives the fourth information element from the first device, where the fourth information element indicates that the first device needs to switch to the first channel.

Alternatively, optionally, the method according to the third aspect may further include: The second device sends a fourth information element to the first device, and the first device receives the fourth information element from the second device, where the fourth information element indicates that the first device needs to switch to the first channel.

Further, the fourth information element may include at least one of the following: channel identification information, bandwidth information, or a switch count. The channel identification information is used to identify the first channel, the bandwidth information indicates the bandwidth of the first channel, and the switch count indicates the moment of switching to the first channel.

Optionally, interference with the second channel is greater than interference with the first channel, and/or a distance of transmission performed using the second channel is greater than a distance of transmission performed using the first channel.

In a possible design solution, the first information element is carried in a first beacon frame, and the first beacon frame is a frame sent in a broadcast manner.

In a possible design solution, the third information element is carried in a second beacon frame, and the second beacon frame is a frame sent in a broadcast manner.

In a possible design solution, the fourth information element is at least one of the following: a channel switch announcement CSA information element or a wideband channel switching WBCS information element, where the CSA information element and the WBCS information element are information elements sent in a unicast manner.

In a possible design solution, a bandwidth and a symbol of the first channel meet the following relationship: A narrower bandwidth of the first channel indicates a longer symbol of the first channel. For example, a quantity of subcarriers, a symbol, and a bandwidth of the first channel meet the following relationship:

$$\begin{cases} \alpha = \dfrac{BW_{wb}}{BW_{nb}} \\ CP = \alpha \times \gamma \times \dfrac{N_{sc}}{BW_{wb}} \\ OFDM_{wop} = \alpha \times \dfrac{N_{sc}}{BW_{wb}} \\ OFDM_{wp} = \alpha \times \left( \gamma \times \dfrac{N_{sc}}{BW_{wb}} + \dfrac{N_{sc}}{BW_{wb}} \right) \end{cases},$$

where

$BW_{wb}$ is a reference bandwidth, $BW_{nb}$ is the bandwidth of the first channel, the reference bandwidth is greater than the bandwidth of the first channel, $CP$ is a cyclic prefix, a value of $\gamma$ is greater than 0 and less than 1, $N_{sc}$ is the quantity of subcarriers on the first channel, $OFDM_{wop}$ indicates that the symbol of the first channel is a symbol that does not include the cyclic prefix, and $OFDM_{wp}$ indicates that the symbol of the first channel is a symbol that includes the cyclic prefix.

In addition, for technical effect of the method according to the third aspect, refer to the technical effect of the method according to the first aspect. Details are not described herein again.

According to a fourth aspect, a communication apparatus is provided. The communication apparatus includes a module configured to perform the method according to the first aspect, for example, a transceiver module and a processing module. The transceiver module is configured to indicate a transceiver function of the communication apparatus, and the processing module is configured to perform a function of the communication apparatus other than the transceiver function.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module, and the storage module stores a program or instructions. When the processing module executes the program or the instructions, the communication apparatus is enabled to perform the method according to the first aspect.

It may be understood that the communication apparatus according to the fourth aspect may be a terminal or a network device, may be a chip (system) or another part or component that may be disposed in a terminal or a network device, or may be an apparatus that includes a terminal or a network device. This is not limited in this application.

In addition, for technical effect of the communication apparatus according to the fourth aspect, refer to the technical effect of the method according to the first aspect. Details are not described herein again.

According to a fifth aspect, a communication apparatus is provided. The communication apparatus includes a module configured to perform the method according to the second aspect, for example, a transceiver module and a processing module. For example, the transceiver module is configured to indicate a transceiver function of the communication apparatus, and the processing module is configured to perform a function of the communication apparatus other than the transceiver function.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module, and the storage module stores a program or instructions. When the processing module executes the program or the instructions, the communication apparatus is enabled to perform the method according to the second aspect.

It may be understood that the communication apparatus according to the fifth aspect may be a terminal or a network device, may be a chip (system) or another part or component that may be disposed in a terminal or a network device, or may be an apparatus that includes a terminal or a network device. This is not limited in this application.

In addition, for technical effect of the communication apparatus according to the fifth aspect, refer to the technical effect of the method according to the second aspect. Details are not described herein again.

According to a sixth aspect, a communication apparatus is provided. The communication apparatus includes a processor. The processor is configured to perform the method according to any one of the possible implementations of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design solution, the communication apparatus according to the sixth aspect may further include a memory. The memory and the processor may be integrated together, or may be disposed separately. The memory may be configured to store a computer program and/or data related to the method according to any one of the first aspect or the second aspect.

In embodiments of this application, the communication apparatus according to the sixth aspect may be the terminal or the network device according to any one of the first aspect or the second aspect, or a chip (system) or another part or component that may be disposed in the terminal or the network device, or an apparatus that includes the terminal or the network device.

In addition, for technical effect of the communication apparatus according to the sixth aspect, refer to the technical effect of the method according to any one of the implementations of the first aspect or the second aspect. Details are not described herein again.

According to a seventh aspect, a communication apparatus is provided. The communication apparatus includes a processor. The processor is coupled to a memory, and the processor is configured to execute a computer program stored in the memory, so that the communication apparatus performs the method according to any one of the possible implementations of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be the terminal or the network device according to any one of the first aspect or the second aspect, or a chip (system) or another part or component that may be disposed in the terminal or the network device, or an apparatus that includes the terminal or the network device.

In addition, for technical effect of the communication apparatus according to the seventh aspect, refer to the technical effect of the method according to any one of the implementations of the first aspect or the second aspect. Details are not described herein again.

According to an eighth aspect, a communication apparatus is provided, and includes a processor and a memory. The memory is configured to store a computer program, and when the processor executes the computer program, the communication apparatus is enabled to perform the method according to any one of the implementations of the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the eighth aspect may be the terminal or the network device according to any one of the first aspect or the second aspect, or a chip (system) or another part or component that may be disposed in the terminal or the network device, or an apparatus that includes the terminal or the network device.

In addition, for technical effect of the communication apparatus according to the eighth aspect, refer to the technical effect of the method according to any one of the implementations of the first aspect or the second aspect. Details are not described herein again.

According to a ninth aspect, a communication system is provided. The communication system includes a first device configured to perform the method according to the first aspect and a second device configured to perform the method according to the second aspect.

According to a tenth aspect, a computer-readable storage medium is provided, and includes a computer program or instructions. When the computer program or the instructions are run on a computer, the computer is enabled to perform the method according to any one of the possible implementations of the first aspect or the second aspect.

According to an eleventh aspect, a computer program product is provided, and includes a computer program or instructions. When the computer program or the instructions are run on a computer, the computer is enabled to perform the method according to any one of the possible implementations of the first aspect or the second aspect.

## BRIEF DESCRIPTION OF DRAWINGS

FIG. 1 is a diagram of a Wi-Fi frame structure;
FIG. 2 is a diagram of an architecture of a communication system according to an embodiment of this application;
FIG. 3 is a schematic flowchart 1 of a communication method according to an embodiment of this application;
FIG. 4(a) to FIG. 4(c) are a diagram of a frequency domain resource in a communication method according to an embodiment of this application;
FIG. 5 is a schematic flowchart 2 of a communication method according to an embodiment of this application;
FIG. 6 is a schematic flowchart 3 of a communication method according to an embodiment of this application;
FIG. 7 is a diagram 1 of a structure of a communication apparatus according to an embodiment of this application; and
FIG. 8 is a diagram 2 of a structure of a communication apparatus according to an embodiment of this application.

## DESCRIPTION OF EMBODIMENTS

For ease of understanding, the following first describes technical terms in embodiments of this application.

1. Wireless Fidelity (wireless fidelity, Wi-Fi)

At present, Wi-Fi, as a convenient local area network wireless communication mode, has been widely used in innumerable homes. A major technical feature of Wi-Fi is that a channel needs to be contended for in an unlicensed frequency band (industrial scientific medical, ISM) by using a listen before talk (listen before talk, LBT) technology, to obtain a right to use the wireless channel. It is stipulated in IEEE 802.11 series protocols that frames supported by Wi-Fi mainly include a non-high throughput (non-high throughput, non-HT) frame, a high throughput (high throughput, HT) frame, and a very high throughput (very high throughput, VHT) frame.

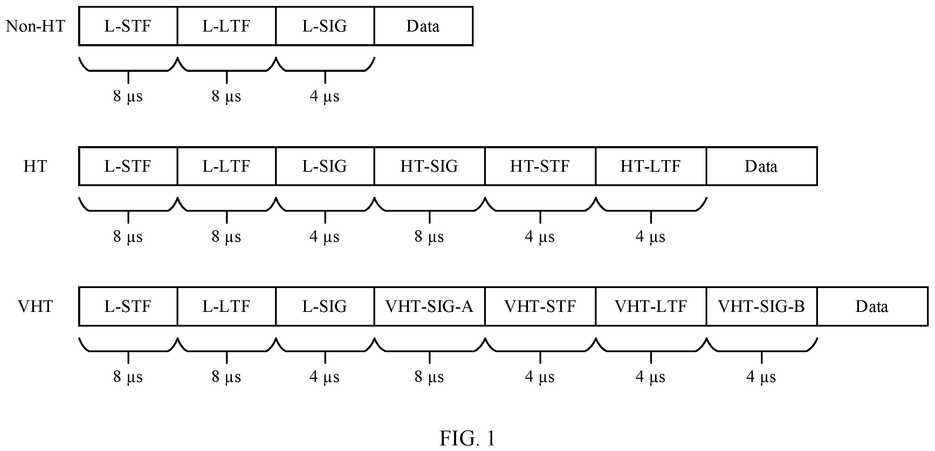

As shown in FIG. 1, a structure of a non-HT frame may include a legacy short training field (legacy short training field, L-STF), a legacy long training field (legacy long training field, L-LTF), a legacy signal field (legacy signal field, L-SIG), and data (data). The L-STF, the L-LTF, and the L-SIG may be understood as a preamble part, and time domain lengths of the L-STF, the L-LTF, and the L-SIG are usually fixed. For example, both a time domain length of the L-STF and a time domain length of the L-LTF are 8 microseconds ($\mu$s), and a time domain length of the L-SIG is 4 $\mu$s. A time domain length of the data part is dynamic and usually depends on a data volume. In addition, a length of a cyclic prefix (cyclic prefix, CP) of the data part is not fixed. For example, based on different actual situations, lengths of the CP may be 0.4 $\mu$s, 0.8 $\mu$s, 1.6 $\mu$s, 3.2 $\mu$s, and the like.

As shown in FIG. 1, a structure of an HT frame may include an L-STF, an L-LTF, an L-SIG, a high throughput (high throughput, HT) -SIG, an HT-STF, an HT-LTF, and data. For time domain lengths of the L-STF, the L-LTF, and the L-SIG, refer to the non-HT frame for understanding. Details are not described again. A time domain length of the HT-SIG is 8 μs, and a time domain length of the HT-STF is 4 μs. There may be one or more HT-LTFs, and a time domain length of each HT-LTF is one symbol (symbol), for example, 4 μs. The data part may be understood with reference to the non-HT frame. Details are not described again.

As shown in FIG. 1, a structure of a VHT frame may include an L-STF, an L-LTF, an L-SIG, a very high throughput (very high throughput, VHT)-SIG, a VTH-STF, a VHT-LTF, a VHT-SIG-B, and data. For time domain lengths of the L-STF, the L-LTF, and the L-SIG, refer to the non-HT frame for understanding. Details are not described again. A time domain length of the VHT-SIG is 8 μs, and a time domain length of the VTH-STF is 4 μs. There may be one or more VHT-LTFs, and a time domain length of each VHT-LTF may be one symbol, for example, 4 μs. A time domain length of the VHT-SIG-B is 4 μs. The data part may be understood with reference to the non-HT frame. Details are not described again.

It is stipulated in IEEE 802.11 series protocols that a channel corresponding to each of the non-HT frame, the HT frame, and the VHT frame is at least 64 subcarriers (subcarrier, SC), and a minimum bandwidth of the channel is 20 MHz. In this case, when a quantity of subcarriers on the channel increases, the bandwidth of the channel also increases proportionally. For example, the bandwidth of the channel increases by a power of 2, to be specific, the bandwidth of the channel may be 20 MHz, 40 MHz, 80 MHz, 160 MHz, and 320 MHz. However, increasing by a power of 2 causes a large bandwidth difference between channels. Consequently, spectrum resources of the unlicensed frequency band cannot be fully used, causing a waste of spectrum resources. For example, when a transmission requirement is that a bandwidth of 170 MHz is required for transmission, a channel with a bandwidth of 160 MHz cannot meet the transmission requirement, and when a channel with a bandwidth of 320 MHz is selected, a spectrum resource with a bandwidth of 150 MHz cannot be fully used. In addition, because user equipments using Wi-Fi contend for a channel by using the LBT technology, as increasingly more user equipments exist, a limited spectrum resource becomes excessively congested, and mutual interference is increasingly strong, causing great degradation in user experience.

In view of the foregoing technical problem, embodiments of this application provide the following technical solutions, to improve spectrum resource utilization and user experience.

The following describes the technical solutions of this application with reference to accompanying drawings.

The technical solutions in embodiments of this application may be applied to various communication systems, for example, a wireless network (Wi-Fi) system, a vehicle-to-everything (vehicle-to-everything, V2X) communication system, a device-to-device (device-to-device, D2D) communication system, an internet of vehicles communication system, 4th generation (4th generation, 4G) mobile communication systems such as a long term evolution (long term evolution, LTE) system and a worldwide interoperability for microwave access (worldwide interoperability for microwave access, WiMAX) communication system, a 5th generation (5th generation, 5G) communication system like a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are consistent when differences are not emphasized. The terms "of (of)", "corresponding relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

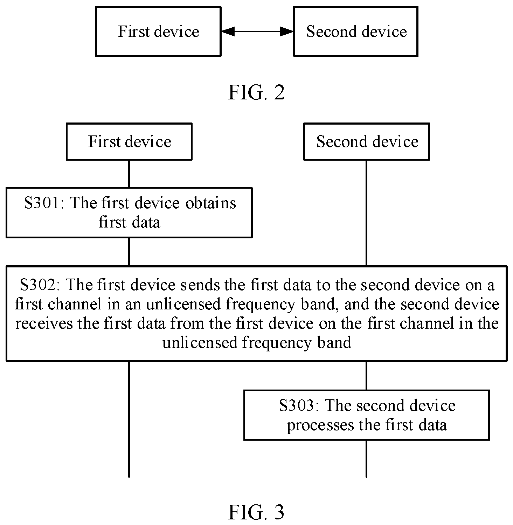

For ease of understanding of embodiments of this application, a communication system applicable to embodiments of this application is first described in detail by using a communication system shown in FIG. 2 as an example. For example, FIG. 2 is a diagram of an architecture of a communication system to which a communication method provided in embodiments of this application is applicable.

As shown in FIG. 2, the communication system may include a first device and a second device. Both the first device and the second device may be terminals or network devices, or the first device may be a network device, and the second device may be a terminal. This is not specifically limited herein.

The terminal may be a terminal having a transceiver function, or may be a chip or a chip system that may be disposed in the terminal. The terminal may also be referred to as user equipment (user equipment, UE), a station (station, STA), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more components or units. Alternatively, the terminal in this application may be an uncrewed aerial vehicle module, an uncrewed aerial vehicle assembly, an uncrewed aerial vehicle component, an uncrewed aerial vehicle chip, or an uncrewed aerial vehicle unit that is built in an uncrewed aerial vehicle as one or more components or units.

The network device may be a device that provides access for a terminal. For example, the network device may alternatively include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, an uncrewed aerial vehicle device, and the like. The network device may include a next-generation mobile communication system, for example, a 6G access network device like a 6G base station. Alternatively, in the next-generation mobile communication system, the network device may alternatively be named in another manner, which falls within the protection scope of embodiments of this application. This is not limited in this application. Alternatively, the network device may include a gNB in the 5G system, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), a central unit (central unit, CU) or a distributed unit (distributed unit, DU), an RSU having a base station function, a wired access gateway, or a 5G core network.

In embodiments of this application, because a bandwidth of a Wi-Fi channel increases by a power of 2, in this case, for a remaining spectrum resource in an unlicensed frequency band, that is, a frequency segment other than a frequency segment used by wireless fidelity Wi-Fi, a bandwidth of the spectrum resource usually cannot meet a minimum bandwidth requirement of the Wi-Fi channel, in other words, such spectrum resource part cannot be used by Wi-Fi. Therefore, the first device may send first data to the second device on a frequency domain resource of such part. This can improve spectrum resource utilization of the unlicensed frequency band.

With reference to FIG. 3 to FIG. 6, the following specifically describes an interaction procedure between the devices in the communication system by using method embodiments. The communication method provided in embodiments of this application may be applicable to the foregoing communication system. The following provides specific descriptions.

As shown in FIG. 3, the communication method is applicable to the foregoing communication system, and relates to interaction between the first device and the second device. A specific procedure is as follows:

S301: The first device obtains first data.

The first data may be Wi-Fi-related data. For example, the first data may be data in a Wi-Fi format or a Wi-Fi frame structure. In this case, the first data may be Wi-Fi data or non-Wi-Fi data. This is not limited. For another example, the first data may alternatively be Wi-Fi data. For the Wi-Fi frame structure, refer to the related descriptions in FIG. 1. Details are not described again.

The first device may obtain the first data locally, or may obtain the first data from another device. For example, the first device is a controller of an uncrewed aerial vehicle, and the second device is the uncrewed aerial vehicle. The controller may locally generate control signaling, that is, the first data, for the uncrewed aerial vehicle. For another example, the first device is an AP, and the second device is a STA like a mobile phone. The AP may obtain service data of the mobile phone, that is, the first data, from an application server.

S302: The first device sends the first data to the second device on a first channel in an unlicensed frequency band, and the second device receives the first data from the first device on the first channel in the unlicensed frequency band.

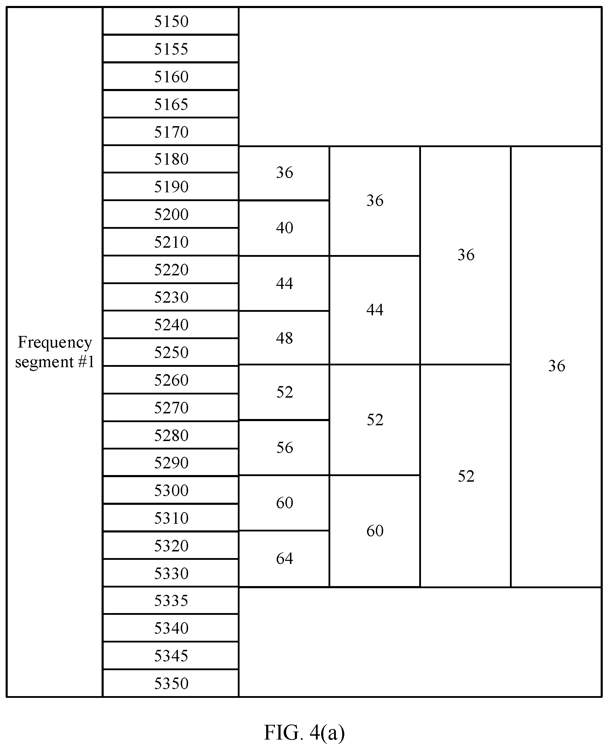

As shown in FIG. 4(a) to FIG. 4(c), the unlicensed frequency band may include at least one of the following frequency segments: 5150 MHz to 5350 MHz, 5470 MHz to 5725 MHz, 5725 MHz to 5850 MHz, or any other possible frequency segment. This is not specifically limited. The unlicensed frequency band may include a frequency segment used by Wi-Fi, and a frequency segment other than the frequency segment used by Wi-Fi that is denoted as a frequency segment used by non-Wi-Fi.

The frequency segment used by Wi-Fi may include a frequency segment #1 (5170 MHz to 5330 MHz) and a frequency segment #2 (5735 MHz to 5835 MHz), and optionally, may further include a frequency segment #3 (5490 MHz to 5710 MHz).

As shown in FIG. 4(a), channels in the frequency segment #1 may be represented as [x:y:z], where x represents a start channel number, that is, the frequency segment #1 starts with a channel #x; y represents a channel step, that is, a channel number difference between two adjacent channels is y; and z represents an end channel number, that is, ends with a channel #z. When a bandwidth of a channel is 20 MHz, the frequency segment #1 may include channels [36:4:64]. When a bandwidth of a channel is 40 MHz, the frequency segment #1 may include channels [36:8:60]. When a bandwidth of a channel is 80 MHz, the frequency segment #1 may include channels [36:8:52]. When a bandwidth of a channel is 16 MHz, the frequency segment #1 may include a channel #36.

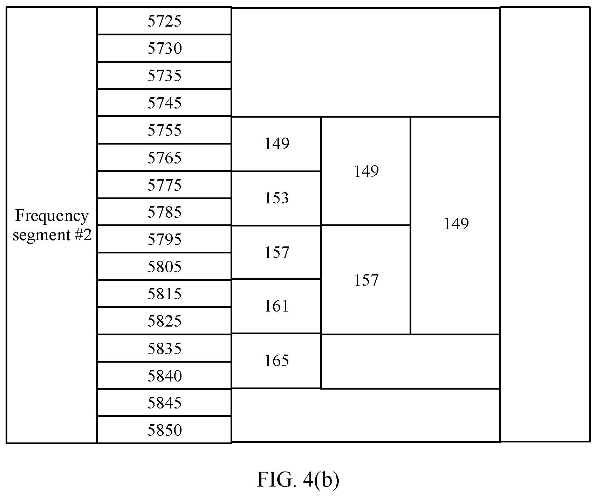

As shown in FIG. 4(b), in the frequency segment #2, when a bandwidth of a channel is 20 MHz, the frequency segment #2 may include channels [149:4:165]. When a bandwidth of a channel is 40 MHz, the frequency segment #2 may include channels [149:8:157]. When a bandwidth of a channel is 80 MHz, the frequency segment #2 may include a channel #149.

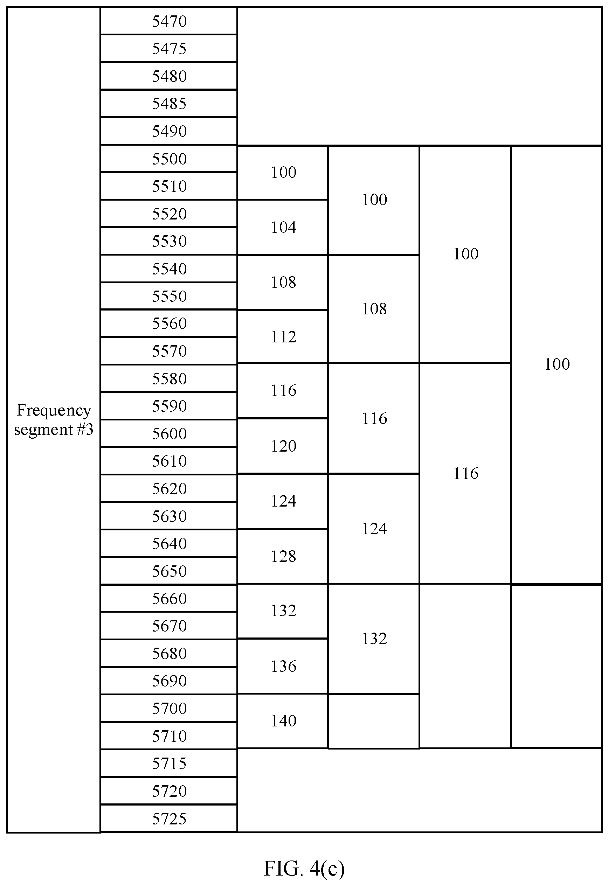

As shown in FIG. 4(c), in the frequency segment #3, when a bandwidth of a channel is 20 MHz, the frequency segment #3 may include channels [100:4:140]. When a bandwidth of a channel is 40 MHz, the frequency segment #3 may include channels [100:8:132]. When a bandwidth of a channel is 80 MHz, the frequency segment #3 may include channels [100:8:132]. When a bandwidth of a channel is 160 MHz, the frequency segment #3 may include a channel #100.

It can be learned that a minimum bandwidth of a Wi-Fi channel is 20 MHz, and can increase by a power of 2. In this case, for a spectrum resource not used by Wi-Fi in the frequency segment #1, for example, a total of 20 MHz from 5150 MHz to 5170 MHz or a total of 20 MHz from 5130 MHz to 5350 MHz, if the Wi-Fi channel occupies the spectrum resource by using a bandwidth of 20 MHz, out-of-band energy leakage occurs. Therefore, the spectrum resource is a spectrum resource that cannot be used by Wi-Fi, or a frequency segment used by non-Wi-Fi in the frequency segment #1. In the frequency segment #2, a total of 10 MHz from 5725 MHz to 5735 MHz or a total of 10 MHz from 5840 MHz to 5850 MHz is less than the minimum bandwidth of the Wi-Fi channel. Therefore, the spectrum resource is also a spectrum resource that cannot be used by Wi-Fi, or a frequency segment used by non-Wi-Fi in the frequency segment #2. Similarly, in the frequency segment #3, 5470 MHz to 5490 MHz, and 5715 MHz to 5725 MHz are also spectrum resources that cannot be used by Wi-Fi, or frequency segments used by non-Wi-Fi in the frequency segment #3. Therefore, the frequency segment used by non-Wi-Fi in the unlicensed frequency band may include the frequency segments used by non-Wi-Fi in the frequency segment #1 and the frequency segment #2, and optionally, may further include the frequency segment used by non-Wi-Fi in the frequency segment #3.

A bandwidth of the first channel may be less than 20 MHz, to fully use a spectrum resource that cannot be used by Wi-Fi, so as to further improve spectrum resource utilization. In addition, because the bandwidth of the first channel is less than 20 MHz, the first channel may also be referred to as a narrowband, or may be named in another possible manner. This is not limited. Therefore, a narrowband mentioned below in embodiments of this application may be understood as a channel whose bandwidth is less than 20 MHz.

For example, the bandwidth of the first channel is any one of the following: 1 MHz, 5 MHz, 10 MHz, or 15 MHz, to flexibly adapt to various transmission requirements. For example, when a transmission rate requirement is low, 1 MHz or 5 MHz may be selected. For another example, when a transmission rate needs to be ensured, 10 MHz or 15 MHz may be selected. Certainly, the bandwidth of the first channel is not limited to the foregoing values. For example, the bandwidth may be any other possible value, for example, 2 MHz, 4 MHz, 8 MHz, or 16 MHz. This is not limited.

If the bandwidth of the first channel is 1 MHz or 5 MHz, a frequency segment in which the first channel is located is any one of the following: 5150 MHz to 5155 MHz, 5155 MHz to 5160 MHz, 5160 MHz to 5165 MHz, 5165 MHz to 5170 MHz, 5330 MHz to 5335 MHz, 5335 MHz to 5340 MHz, 5340 MHz to 5345 MHz, 5345 MHz to 5350 MHz, 5470 MHz to 5475 MHz, 5475 MHz to 5480 MHz, 5480 MHz to 5485 MHz, 5485 MHz to 5490 MHz, 5710 MHz to 5715 MHz, 5715 MHz to 5720 MHz, 5720 MHz to 5725 MHz, 5725 MHz to 5730 MHz, 5730 MHz to 5735 MHz, 5835 MHz to 5840 MHz, 5840 MHz to 5845 MHz, and 5845 MHz to 5850 MHz. That is, the remaining spectrum resource in the unlicensed frequency band may be divided into more bandwidths at a granularity of 5 MHz, to provide services for more users.

Alternatively, if the bandwidth of the first channel is 10 MHz, a frequency segment in which the first channel is located is any one of the following: 5150 MHz to 5160 MHz, 5155 MHz to 5165 MHz, 5160 MHz to 5170 MHz, 5330 MHz to 5340 MHz, 5335 MHz to 5345 MHz, 5340 MHz to 5350 MHz, 5470 MHz to 5480 MHz, 5480 MHz to 5490 MHz, 5710 MHz to 5720 MHz, 5715 MHz to 5725 MHz, 5720 MHz to 5730 MHz, 5725 MHz to 5735 MHz, 5835 MHz to 5845 MHz, and 5840 MHz to 5850 MHz. That is, the remaining spectrum resource in the unlicensed frequency band may be divided into a plurality of bandwidths at a granularity of 10 MHz, to balance the transmission rate and a quantity of served users.

Alternatively, if the bandwidth of the first channel is 15 MHz, a frequency segment in which the first channel is located is any one of the following: 5150 MHz to 5165 MHz, 5155 MHz to 5170 MHz, 5330 MHz to 5345 MHz, 5335 MHz to 5350 MHz, 5470 MHz to 5485 MHz, 5475 MHz to 5490 MHz, 5710 MHz to 5725 MHz, 5715 MHz to 5730 MHz, 5720 MHz to 5735 MHz, and 5835 MHz to 5850 MHz. That is, the remaining spectrum resource in the unlicensed frequency band may be divided into a plurality of bandwidths at a granularity of 15 MHz, to ensure the transmission rate.

It can be learned that the bandwidth of the first channel may be flexibly adjusted in a range from 1 MHz to 20 MHz based on an actual requirement. In this case, a symbol of the first channel may also dynamically change based on adjustment of the bandwidth of the first channel, to ensure that a bearer capability of the channel remains unchanged, or a large change does not occur. It may be understood that the symbol of the first channel may be an orthogonal frequency division multiplexing (orthogonal frequency division multiplexing, OFDM) symbol, or any other possible symbol. This is not limited.

For example, a bandwidth and a symbol of the first channel may meet the following relationship: A narrower bandwidth of the first channel indicates a longer symbol of the first channel; and on the contrary, a wider bandwidth of the first channel indicates a shorter symbol of the first channel. In this case, a quantity of subcarriers on the first channel may be a product of the bandwidth and the bandwidth of the first channel. Therefore, a quantity of subcarriers, a symbol, and a bandwidth of the first channel may meet a relationship shown in the following formula (1):

$$\begin{cases} \alpha = \dfrac{BW_{wb}}{BW_{nb}} \\ CP = \alpha \times \gamma \times \dfrac{N_{sc}}{BW_{wb}} \\ OFDM_{wop} = \alpha \times \dfrac{N_{sc}}{BW_{wb}} \\ OFDM_{wp} = \alpha \times \left( \gamma \times \dfrac{N_{sc}}{BW_{wb}} + \dfrac{N_{sc}}{BW_{wb}} \right) \end{cases} \quad (1),$$

where

$BW_{wb}$ may be a reference bandwidth, and the reference bandwidth is usually greater than or equal to 20 MHz. For ease of understanding, 20 MHz is used as an example for description in embodiments of this application. $BW_{nb}$ may be the bandwidth of the first channel, $CP$ may be a cyclic prefix, a value of $y$ may be greater than 0 and less than 1, $N_{sc}$ may be the quantity of subcarriers on the first channel, $OFDM_{wop}$ may indicate that the symbol of the first channel is a symbol that does not include the cyclic prefix, and $OFDM_{wp}$ may indicate that the symbol of the first channel is a symbol that includes the cyclic prefix.

It can be learned that, if the bandwidth and the symbol of the first channel change in a proportional manner, for example, if the bandwidth of the first channel decreases by one time, and the symbol length of the first channel correspondingly increases by one time, the quantity of subcarriers on the first channel remains unchanged, or a quantity of frequency domain resources that can be scheduled is not affected. Certainly, the bandwidth and the symbol of the first channel may alternatively change in a non-proportional manner. For example, the bandwidth of the first channel decreases by two times, and the symbol length of the first channel increases by one time. This is not limited.

In this embodiment of this application, when the second device accesses the first channel, the first device may send the first data to the second device on the first channel. Similarly, when the second device accesses the first channel, the second device may receive the first data sent by the first device on the first channel. The second device may directly access the first channel, or may switch from another channel to the first channel in a switching manner. For details, refer to the following related descriptions. Details are not described herein.

S303: The second device processes the first data.

The second device may perform a corresponding operation based on the first data. For example, the first device is a controller of an uncrewed aerial vehicle, and the second device is the uncrewed aerial vehicle. The uncrewed aerial vehicle may adjust a flight posture based on control signaling, that is, the first data. For another example, the first device is an AP, and the second device is a mobile phone. The mobile phone may perform a corresponding operation based on service data. For example, if the service data is a video stream, the mobile phone may display the video stream.

In conclusion, when the bandwidth of the Wi-Fi channel increases by a power of 2, for a remaining spectrum resource in the unlicensed frequency band, for example, the frequency segment other than the frequency segment used by wireless fidelity Wi-Fi, a bandwidth of the spectrum resource generally cannot meet a minimum bandwidth requirement of the Wi-Fi channel, in other words, such spectrum resource part cannot be used by Wi-Fi. Therefore, the first device may send the first data to the second device on a frequency domain resource of such part, to improve spectrum resource utilization of the unlicensed frequency band.

With reference to the foregoing embodiment, in a possible solution, before the first device and the second device perform data transmission on a corresponding channel, for example, before the procedure described in FIG. 3, the first device and the second device may access the channel. Details are described below.

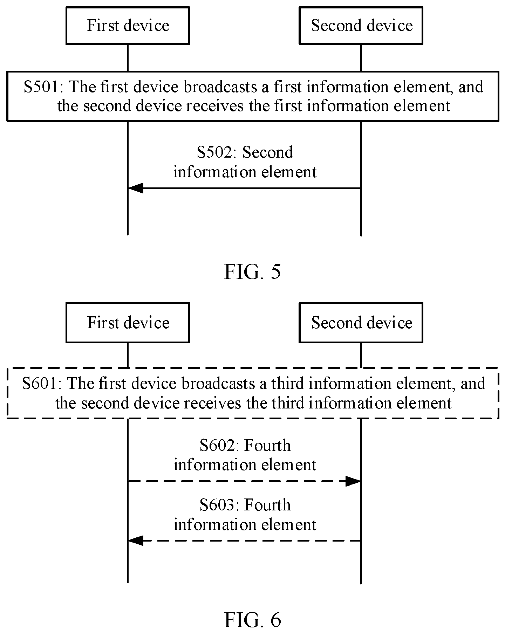

As shown in FIG. 5, a channel access procedure is specifically as follows:

S501: The first device broadcasts a first information element, and the second device receives the first information element.

In a possible manner, the first information element may indicate a channel supported by the first device or a narrowband supported by the first device. For example, the channel supported by the first device includes the foregoing first channel. For example, the first information element may include at least one of the following: information element identification information (denoted as information element identification information #1), device identification information (denoted as device identification information #1), or channel bandwidth information (denoted as channel bandwidth information #1).

The information element identification information #1 may be used to identify the first information element. For example, the information element identification information #1 may include information for identifying the first information element, and information for representing a length of the first information element. The information for identifying the first information element may be an element identifier (element identifier, EID), denoted as an EID#1, and is used to uniquely identify the first information element. The information for representing the length of the first information element may be an information element (information element, IE) length (IE length), denoted as an IE length #1, and is used to represent the length of the first information element, or may be used to represent a remaining length of the first information element other than the EID #1 and the IE length #1. This is not limited.

The device identification information #1 may be used to identify an identity and a type of the first device. For example, the device identification information #1 may include an organizationally unique identifier (organizationally unique identifier, OUI) field (denoted as an OUI field #1) or an OUI type (type) field (denoted as an OUI type field #1). The OUI field #1 may indicate the identity of the first device, for example, a device vendor of the first device, so that the device is identified as the first device based on the device vendor. The OUI type field #1 may indicate a meaning of subsequent information, for example, a meaning of the channel bandwidth information #1. For example, when a value of the OUI type field #1 is 0, it indicates that the channel bandwidth information #1 is information indicating that the device supports a narrowband.

The channel bandwidth information #1 may indicate a bandwidth and/or a channel number of the narrowband supported by the first device. For example, the channel bandwidth information #1 includes a narrowband (narrowband) field. The narrowband field may indicate the bandwidth of the narrowband supported by the device, for example, indicate that the bandwidth of the narrowband is less than 20 MHz, or indicate that the bandwidth of the narrowband is specifically 1 MHz, 5 MHz, 10 MHz, 15 MHz, or the like, which is not limited; and/or the narrowband field may further indicate the channel number (including a channel number of the first channel) of the narrowband supported by the device. In an implementation, the narrowband field may include a bitmap (bitmap), to indicate, by using a combination of values of a plurality of bits in the bitmap, the bandwidth and/or the channel number of the narrowband supported by the device. Alternatively, the narrowband field may be implemented in any other possible manner. This is not limited.

It may be understood that the narrowband field is an example name, and is not limited. The narrowband field may be replaced with any possible name, for example, a bandwidth (bandwidth) field #1 or a frequency segment field #1. In addition, the channel number of the narrowband may be set based on an actual situation. For example, an existing channel number may be used for the channel number of the narrowband, or a new channel number may be defined. This is not limited.

It may be further understood that, because the OUI field #1 may indicate that the device is the first device, the OUI type field #1 may indicate that the subsequent information indicates that the device supports the narrowband, and the narrowband field may indicate the bandwidth and/or the channel number of the narrowband supported by the device. Based on this, the OUI field #1, the OUI type field #1, and the narrowband field may be combined to indicate the bandwidth and/or the channel number of the narrowband supported by the first device.

For ease of understanding, the following shows a structure of the first information element by using Table 1.

Table 1

| EID #1 | IE length #1 | IE body (body) |
| --- | --- | --- |

The information element identification information #1 may be carried in the EID and the IE length, and the EID and the IE length each may be a field with a length of one octet (octet). The channel bandwidth information #1 may be carried in the IE body. In this way, a specific structure of the first information element may be shown in the following Table 2.

Table 2

| EID #1 | IE length #1 | OUI field #1 | OUI type field #1 | Narrowband field |
| --- | --- | --- | --- | --- |

The OUI field #1 may be a field with a length of three octets, the OUI type field #1 is a field with a length of one octet, and the narrowband field may be a field with a length of n octets, where n is an integer greater than or equal to 1. In other words, a length of the narrowband field may be dynamically adjusted based on an information amount indicated by the narrowband field.

For example, an example of the first information element may be shown in the following Table 3.

Table 3

| EID #1 (0xDD) | IE length #1 (0x5) | OUI field #1 (0x3D85AC) | OUI type field #1 (0x31) | Narrowband field (0x7) |
| --- | --- | --- | --- | --- |

In Table 3, each field may be represented by a hexadecimal character. The EID#1 is 0xDD, to indicate content of the EID#1. The IE length #1 is 0x5, to indicate that the length of the first information element is specifically 7 octets. The OUI field #1 is 0x3D85AC, to indicate that which one is the device vendor, for example, an HW vendor. The OUI type field #1 is 0x31, to indicate that a meaning of the narrowband field is that the device supports the narrowband. The narrowband field is 0x7, and 0x7 may be represented as 0000_0111 after being converted into binary, that is, a bitmap of eight bits (1 octet), to indicate that the bandwidth of the narrowband supported by the device includes 1 MHz, 5 MHz, and 10 MHz.

Alternatively, in another possible manner, the first information element may indicate the channel supported by the first device, or a wideband supported by the first device. For example, the channel supported by the first device includes a second channel in the unlicensed frequency band. A frequency segment in which the second channel is located may be the frequency segment used by Wi-Fi in the unlicensed frequency band, and a bandwidth of the second channel may be different from a bandwidth of the first channel, for example, 20 MHz, 40 MHz, or 80 MHz. Because the bandwidth of the second channel is greater than or equal to 20 MHz, the second channel may also be referred to as a wideband, or may be named in another possible manner. This is not limited. Therefore, a wideband mentioned below in embodiments of this application may be understood as a channel whose bandwidth is greater than or equal to 20 MHz.

For example, the first information element may also include at least one of the following: information element identification information (denoted as information element identification information #2), device identification information (denoted as device identification information #2), or channel bandwidth information (denoted as channel bandwidth information #2).

The information element identification information #2 may be used to identify the first information element. For example, the information element identification information #2 includes an EID #2 and an IE length #2. For specific implementation, refer to the foregoing information element identification information #1 for understanding. Details are not described again.

The device identification information #2 may be used to identify an identity and a type of the first device. For example, the device identification information #2 may include an OUI field (denoted as an OUI field #2) or an OUI type field (denoted as an OUI type field #2). The OUI field #2 may be understood with reference to the foregoing OUI field #1. Details are not described again. The OUI type field #2 may indicate a meaning of subsequent information, for example, a meaning of the channel bandwidth information #2. For example, when a value of the OUI type field #2 is 1, it indicates that the channel bandwidth information #2 is information indicating that the device supports a wideband.

The channel bandwidth information #2 may indicate a bandwidth and/or a channel number of the wideband supported by the first device. For example, the channel bandwidth information #2 includes a wideband (wideband) field. The wideband field may indicate the bandwidth of the wideband supported by the device, for example, indicate that the bandwidth of the wideband is greater than or equal to 20 MHz, or indicate that the bandwidth of the wideband is specifically 20 MHz, 40 MHz, 80 MHz, 160 MHz, or the like, which is not limited; and/or the wideband field may further indicate the channel number (including a channel number of the second channel) of the wideband supported by the device. In an implementation, the wideband field may also include a bitmap, to indicate, by using a combination of values of a plurality of bits in the bitmap, the bandwidth and/or the channel number of the wideband supported by the device. Alternatively, the wideband field may be implemented in any other possible manner. This is not limited.

It may be understood that the wideband field is an example name, and is not limited. The wideband field may also be replaced with any possible name, for example, a bandwidth field #2 or a frequency segment field #2. Alternatively, the wideband field and the foregoing narrowband field may be replaced with a same name, for example, both are named as a bandwidth field or a frequency segment field. In this case, different meanings of a same field may be indicated via the OUI type field.

It may be further understood that, similar to the foregoing related description, the OUI field #2, the OUI type field #2, and the narrowband field may also be combined to indicate the bandwidth and/or the channel number of the wideband supported by the first device.

For ease of understanding, the following shows another specific structure of the first information element by using Table 4.

Table 4

| EID #2 | IE length #2 | OUI field #2 | OUI type field #2 | Wideband field |
| --- | --- | --- | --- | --- |

The EID #2, the IE length #2, the OUI field #2, and the OUI type field #2 may be understood with reference to the foregoing Table 2. Details are not described again. In addition, similar to the foregoing Table 2, in Table 4, the wideband field may also be a field with a length of n octets, in other words, a length of the wideband field may be dynamically adjusted based on an information amount indicated by the wideband field.

For example, another example of the first information element may be shown in the following Table 5.

Table 5

| EID #2 (0xDD) | IE length #2 (0x5) | OUI field #2 (0x3D85AC) | OUI type field #2 (0x32) | Wideband field (0x7) |
| --- | --- | --- | --- | --- |

The EID #2, the IE length #2, and the OUI field #2 may be understood with reference to the foregoing Table 3. Details are not described again. The OUI type field #2 is 0x32, to indicate a meaning of the wideband field is that the device supports the wideband. The narrowband field is 0x7, and 0x7 may be represented as 0000_0111 after being converted into binary, that is, a bitmap of eight bits (1 octet), to indicate that the bandwidth of the wideband supported by the device includes 20 MHz, 40 MHz, and 80 MHz.

It may be further understood that, when the first information element indicates the wideband, a design in the conventional technology may also be used for the first information element. For details, refer to IEEE P802.11-REVme™/D1.0, December 2021, Part 11. Details are not described again.

In this embodiment of this application, the first information element may be carried in a first beacon (beacon) frame. The first beacon frame may be a frame sent in a broadcast manner, that is, the first information element may be broadcast by reusing an existing broadcast frame structure, to reduce implementation difficulty. For example, a structure of the first beacon frame may be shown in the following Table 6.

Table 6

| Timestamp (timestamp) | Beacon interval (beacon interval) | Capability information (capability information) | IE_1 | IE_2 | ... | IE_N |
| --- | --- | --- | --- | --- | --- | --- |

The timestamp may indicate a time point at which the first beacon frame is broadcast. The beacon interval may be used as a broadcast interval of the first beacon frame, that is, the first beacon frame may be periodically broadcast. For example, when the first information element indicates the narrowband supported by the first device, the first device may periodically broadcast the first beacon frame in the bandwidth and a frequency of the narrowband. Alternatively, when the first information element indicates the wideband supported by the first device, the first device may periodically broadcast the first beacon frame in the bandwidth and a frequency of the wideband. Alternatively, regardless of whether the first information element indicates that the first device supports the narrowband or the wideband, the first device periodically broadcasts the first beacon frame in any bandwidth and any frequency that are supported by the first device. The capability information may indicate related capabilities of the first beacon frame, for example, an extended service set (extended service set, ESS), an independent basic service set (independent basic service set, IBSS), privacy (privacy) information, and a short preamble (short preamble). N is an integer greater than or equal to 1, and the first information element may be any one of IE_1 to IE_N.

The second device may continuously perform scanning in a bandwidth and a frequency that are supported by the second device. If the bandwidth and the frequency that are supported by the second device include a bandwidth and a frequency at which the first beacon frame is located, the second device may receive, through scanning, the first beacon frame, and obtain the first information element carried in the first beacon frame.

S502: The second device sends a second information element to the first device based on the first information element, and the first device receives the second information element returned by the second device for the first information element.

The second information element may indicate that the second device requests to access the first channel or the second channel. For example, the second information element includes information such as a service set identifier (service set identifier, SSID) and supported rates and BSS membership selectors (supported rates and BSS membership selectors). For example, the second device may learn, based on the first information element, the channel supported by the first device, for example, the bandwidth and/or the channel number of the first channel or the bandwidth and/or the channel number of the second channel. If the second device wants to access the first channel or the second channel, the second device sends, to the first device, a probe request (probe request) frame that carries the second information element, where the probe request frame is denoted as a probe request frame #1. Correspondingly, after the first device receives the probe request frame #1, the first device may further return acknowledgment information (ACK) for the probe request frame #1 to the second device, where the acknowledgment information (ACK) is denoted as acknowledgment information #1 or a probe response (Probe Response) frame, to indicate that the first device has received the probe request frame #1. At this point, both the first device and the second device determine that the peer ends can access a corresponding channel, to transmit data on the channel. For example, when the first device and the second device access the first channel, the first device and the second device may transmit data on the first channel. For specific implementation, refer to the related content shown in FIG. 3. Details are not described again. Alternatively, when the first device and the second device access the second channel, the first device and the second device may transmit data on the second channel. For specific implementation, refer to IEEE P802.11-REVme™/D1.0, December 2021, Part 11. Details are not described again.

With reference to the foregoing embodiment, in a possible solution, after accessing the corresponding channel, the first device and the second device may alternatively switch the channel, for example, switch from the first channel to the second channel, or switch from the second channel to the first channel. The first device and the second device may switch the channel in a broadcast manner (S601), or may switch the channel in a unicast manner (S602 and S603). Details are described below.

As shown in FIG. 6, a channel switching procedure is specifically as follows:

S601: The first device broadcasts a third information element, and the second device receives the third information element.

In a possible manner, when the first device and the second device have accessed the first channel, the third information element may indicate that the devices need to switch to the second channel. In other words, when data transmission needs to be performed in the frequency segment used by Wi-Fi, the first device may indicate, in a broadcast manner, the corresponding device to switch from a frequency segment used by non-Wi-Fi to the frequency segment used by Wi-Fi, that is, switch from the first channel to the second channel, to meet an actual transmission requirement.

The third information element may include at least one of the following: channel identification information (denoted as channel identification information #1), bandwidth information (denoted as bandwidth information #1), or a switch count (denoted as a switch count #1), to ensure that the second device can switch to a specified channel, that is, the second channel, in time. Optionally, the third information element may further include information element identification information (denoted as information element identification information #3) and device identification information (denoted as device identification information #3).

The information element identification information #3 may be used to identify the third information element. For example, the information element identification information #3 includes an EID #3 and an IE length #3. For specific implementation, refer to the foregoing information element identification information #1 for understanding. Details are not described again.

The device identification information #3 may be used to identify an identity and a type of the first device. For example, the device identification information #3 may include an OUI field (denoted as an OUI field #3) or an OUI type field (denoted as an OUI type field #3). The OUI field #3 may be understood with reference to the foregoing OUI field #1. Details are not described again. The OUI type field #3 may indicate a meaning of subsequent information. For example, when a value of the OUI type field #3 is 2, it indicates that the subsequent information is information indicating switching to a wideband.

The channel identification information #1 may be used to identify a channel that needs to be switched to, for example, the second channel. For example, the channel identification information #1 may include a new wideband channel number (new wideband channel number) field, and the new wideband channel number field may indicate a channel number of the second channel. It may be understood that the new wideband channel number field is an example name, and is not limited. The new wideband channel number field may also be replaced with any possible name, for example, a new channel number #1 or a switched channel number #1.

The bandwidth information #1 may indicate a bandwidth of the channel that needs to be switched to, for example, a bandwidth of the second channel, to quickly complete channel switching. For example, the bandwidth information #1 may include a new wide bandwidth (new wide bandwidth) field, and the new wide bandwidth field may indicate the bandwidth of the second channel. It may be understood that the new wide bandwidth is an example name, and is not limited. The new wide bandwidth may be replaced with any possible name, for example, a new bandwidth #1 or a switched channel bandwidth #1.

The switch count #1 may indicate a moment of switching to the second channel. For example, the switch count #1 may be specifically a channel switch count (channel switch count) that is denoted as a channel switch count #1. A count value of the channel switch count #1 may be an integer greater than or equal to 0. In this case, if the count value is 0, it may indicate that channel switching may be performed immediately, in other words, channel switching is performed immediately after the third information element is broadcast. If the count value is 1, it may indicate that channel switching is performed after an interval of one periodicity. The periodicity may be a broadcast interval of a beacon frame. The beacon frame may be a second beacon frame that carries the third information element. For specific implementation, refer to the following related descriptions. Details are not described herein again. If the count value is 2, it may indicate that channel switching is performed after an interval of two periodicities. Then, the rest may be deduced by analogy. Certainly, the count value may alternatively start from 1, in other words, the count value 1 indicates that channel switching may be performed immediately, and then the rest may be deduced by analogy. The count value may alternatively start from any value. This is not limited.

For ease of understanding, the following shows a specific structure of the third information element by using Table 7.

Table 7

| EID #3 | IE length #3 | OUI field #3 | OUI type field #3 | New wideband channel number field | New wide bandwidth field | Channel switch count #1 |
|--------|--------------|--------------|-------------------|-----------------------------------|---------------------------|-------------------------|
|        |              |              |                   |                                   |                           |                         |

The EID #3, the IE length #3, the OUI field #3, and the OUI type field #3 may be understood with reference to the foregoing Table 2. Details are not described again. A length of each of the new wideband channel number field, the new wide bandwidth field, and the channel switch count #1 may be 1 octet.

It may be understood that, because the bandwidth of the second channel is greater than a bandwidth of the first channel, when the first channel has been accessed, if interference with the second channel is less than or equal to interference with the first channel, and/or a distance of transmission performed using the second channel is less than or equal to a distance of transmission performed using the first channel, or a delay in which transmission is performed on the second channel is less than or equal to a delay in which transmission is performed on the first channel, the first device may trigger switching to the second channel, to increase a transmission rate.

Alternatively, in another possible manner, when the first device and the second device have accessed the second channel, the third information element may indicate that the devices need to switch to the first channel. In other words, even if the second device first accesses the second channel, the second device may switch to the first channel in a broadcast manner, to ensure that a spectrum resource can always be efficiently used.

The third information element may also include at least one of the following: channel identification information (denoted as channel identification information #2), bandwidth information (denoted as bandwidth information #2), or a switch count (denoted as a switch count #2), to ensure that the second device can switch to a specified channel, that is, the first channel, in time. Optionally, the third information element may further include information element identification information (denoted as information element identification information #4) and device identification information (denoted as device identification information #4).

The information element identification information #4 may also be used to identify the third information element. For example, the information element identification information #4 includes an EID #4 and an IE length #4. For specific implementation, refer to the foregoing information element identification information #1 for understanding. Details are not described again.

The device identification information #4 may be used to identify an identity and a type of the first device. For example, the device identification information #4 may include an OUI field (denoted as an OUI field #4) or an OUI type field (denoted as an OUI type field #4). The OUI field #4 may be understood with reference to the foregoing OUI field #1. Details are not described again. The OUI type field #4 may indicate a meaning of subsequent information. For example, when a value of the OUI type field #3 is 3, it indicates that the subsequent information is information indicating switching to a narrowband.

The channel identification information #2 may be used to identify a channel that needs to be switched to, for example, the first channel. For example, the channel identification information #2 may include a new narrowband channel number (new narrowband channel number) field, and the new narrowband channel number field may indicate a channel number of the first channel. It may be understood that the new narrowband channel number field is an example name, and is not limited. The new narrowband channel number field may also be replaced with any possible name, for example, a new channel number #2 or a switched channel number #2. Alternatively, the new narrowband channel number field and the foregoing new wideband channel number field may be replaced with a same name, for example, both are named as a new channel number or a switched channel number. In this case, different meanings of a same field may be indicated via the OUI type field.

The bandwidth information #2 may indicate a bandwidth of the channel that needs to be switched to, for example, a bandwidth of the first channel, to quickly complete channel switching. For example, the bandwidth information #2 may include a new narrow bandwidth (new narrow bandwidth) field, and the new narrow bandwidth field may indicate the bandwidth of the first channel. It may be understood that the new narrow bandwidth field is an example name, and is not limited. The new narrow bandwidth field may also be replaced with any possible name, for example, a new bandwidth #2 or a switched channel bandwidth #2. Alternatively, the new narrow bandwidth field and the foregoing new wide bandwidth field may be replaced with a same name, for example, both are named as a new bandwidth or a switched channel bandwidth. In this case, different meanings of a same field may also be indicated via the OUI type field.

The switch count #2 may indicate a moment of switching to the first channel. For example, the switch count #2 may also be specifically a channel switch count (denoted as a channel switch count #2). For specific implementation, refer to the foregoing channel switch count #1 for understanding. Details are not described again.

For ease of understanding, the following shows another specific structure of the third information element by using Table 8.

Table 8

| EID #4 | IE length #4 | OUI field #4 | OUI type field #4 | New narrowband channel number field | New narrow bandwidth field | Channel switch count #2 |
|--------|--------------|--------------|-------------------|-------------------------------------|----------------------------|-------------------------|
|        |              |              |                   |                                     |                            |                         |

The EID #4, the IE length #4, the OUI field #4, and the OUI type field #4 may be understood with reference to the foregoing Table 2. Details are not described again. A length of each of the new narrowband channel number field, the new narrow bandwidth field, and the channel switch count #2 may be one octet.

It may be further understood that, when the second channel has been accessed, although a bandwidth of the second channel is greater than the bandwidth of the first channel, when interference with the second channel is greater than interference with the first channel, and/or a distance of transmission performed using the second channel is greater than a distance of transmission performed using the first channel, the first device may also trigger the first channel to be preferentially switched to, to ensure transmission reliability and delay.

In this embodiment of this application, the third information element may be carried in a second beacon frame. The second beacon frame may be a frame sent in a broadcast manner, that is, the third information element may be broadcast by reusing an existing broadcast frame structure, to reduce implementation difficulty. For specific implementation, refer to the foregoing first beacon frame for understanding. Details are not described again.

In this embodiment of this application, after broadcasting the second beacon frame, the first device may switch to the second channel at the corresponding moment based on the channel switch count #1, or switch to the first channel at the corresponding moment based on the channel switch count #2. Correspondingly, after receiving the second beacon frame, the second device may also switch to the second channel at a corresponding moment based on the channel switch count #1, or switch to the first channel at a corresponding moment based on the channel switch count #2. At this point, both the first device and the second device switch to a corresponding channel, to transmit data on the channel. For example, when the first device and the second device switch to the first channel, the first device and the second device may transmit data on the first channel. For specific implementation, refer to the related content shown in FIG. 3. Details are not described again. Alternatively, when the first device and the second device switch to the second channel, the first device and the second device may transmit data on the second channel. For specific implementation, refer to IEEE P802.11-REVme™/D1.0, December 2021, Part 11. Details are not described again.

S602: The first device sends a fourth information element to the second device, and the second device receives the fourth information element from the first device.

In a possible manner, when the first device and the second device have accessed the first channel, the fourth information element may indicate that the second device needs to switch to the second channel. For example, the fourth information element may be at least one of the following: a CSA information element or a WBCS information element, where the CSA information element and the WBCS information element are information elements sent in a unicast manner, that is, the fourth information element may be sent by reusing an existing unicast information element, to reduce implementation difficulty. The fourth information element is a different information element, and includes different information. Details are described below.

Manner 1: The fourth information element is the WBCS information element (denoted as a WBCS information element #1). The WBCS information element #1 may include channel identification information (denoted as channel identification information #3) or bandwidth information (denoted as bandwidth information #3). Optionally, the WBCS information element #1 may further include information element identification information (denoted as information element identification information #5).

The information element identification information #5 may also be used to identify the fourth information element. For example, the information element identification information #5 includes an EID #5 and an IE length #5. For specific implementation, refer to the foregoing information element identification information #1 for understanding. Details are not described again.

The bandwidth information #3 may indicate the bandwidth of the channel that needs to be switched to, for example, the bandwidth of the second channel. For example, the bandwidth information #3 may include a new bandwidth (new bandwidth) field, and the new bandwidth field may indicate the bandwidth of the second channel. For example, a value range of the new bandwidth field may be 0 to 255, and values 0 to 3 are used to indicate the bandwidth of the second channel, or any other possible value is used to indicate the bandwidth of the second channel.

The channel identification information #3 may indicate the channel that needs to be switched to, for example, the second channel. For example, the channel identification information #3 may include a new channel center frequency segment 0 (new channel center frequency segment 0) field and a new channel center frequency segment 1 (new channel center frequency segment 1) field. The new channel center frequency segment 0 may indicate a channel number of a primary channel that needs to be switched to, for example, a channel number of the second channel. The new channel center frequency segment 1 field may indicate a channel number of a secondary channel that needs to be switched to, for example, a channel other than the second channel in the frequency segment used by Wi-Fi.

For ease of understanding, the following shows a specific structure of the WBCS information element #1 by using Table 9.

Table 9

| EID | IE length | New bandwidth | New channel center frequency | New channel center frequency |
|---|---|---|---|---|
| #5 | #5 | field | segment 0 field | segment 1 field |

The EID #5 and the IE length #5 may be understood with reference to the foregoing Table 2. Details are not described again. A length of each of the new bandwidth field, the new channel center frequency segment 0 field, and the new channel center frequency segment 1 field may be one octet.

Manner 2: The fourth information element is the CSA information element (denoted as a CSA information element #1). The CSA information element #1 may include channel identification information (denoted as channel identification information #4), bandwidth information (denoted as bandwidth information #4), and a switch count (denoted as a switch count #3). Optionally, the CSA information element #1 may further include information element identification information (denoted as information element identification information #6) and switch mode information (denoted as switch mode information #1).

The information element identification information #6 may also be used to identify the fourth information element. For example, the information element identification information #6 includes an EID #6 and an IE length #6. For specific implementation, refer to the foregoing information element identification information #1 for understanding. Details are not described again.

The switch mode information #1 may indicate whether to continue data transmission before channel switching. For example, the switch mode information #1 may include a channel switch mode (channel switch mode) field. When a value of the channel switch mode field is 0, it indicates that interaction before channel switching is not limited, that is, data transmission can continue. When a value of the channel switch mode field is 1, it indicates that interaction needs to be immediately stopped before channel switching, that is, data transmission cannot be continued.

The bandwidth information #4 may indicate the bandwidth of the channel that needs to be switched to, for example, the bandwidth of the second channel. For example, the bandwidth information #4 may include a new channel bandwidth (new channel bandwidth) field, and the new channel bandwidth field may indicate the bandwidth of the second channel. For example, a value range of the new channel bandwidth field may be 0 to 255, and values 0 to 3 are used to indicate the bandwidth of the second channel, or any other possible value is used to indicate the bandwidth of the second channel.

The channel identification information #4 may indicate the channel that needs to be switched to, for example, the second channel. For example, the channel identification information #4 may include a new channel number (new channel number) field. The new channel number field may indicate a channel number of a primary channel that needs to be switched to, for example, a channel number of the second channel.

The switch count #3 may indicate a moment of switching to the second channel. For example, the switch count #3 may also be specifically a channel switch count (denoted as a channel switch count #3). For specific implementation, refer to the foregoing channel switch count #1 for understanding. Details are not described again.

For ease of understanding, the following shows a specific structure of the CSA information element #1 by using Table 10.

Table 10

| EID #6 | IE length #6 | Channel switch mode field | New channel number field | Channel switch count #3 | New channel bandwidth field |
|---|---|---|---|---|---|

The EID #6 and the IE length #6 may be understood with reference to the foregoing Table 2. Details are not described again. A length of each of the channel switch mode field, the new channel number field, the channel switch count #3, and the new channel bandwidth field may be 1 octet.

It may be understood that, similar to the trigger condition of S601, if interference with the second channel is less than or equal to interference with the first channel, and/or a distance of transmission performed using the second channel is less than or equal to a distance of transmission performed using the first channel, the first device may trigger switching to the second channel.

Alternatively, in a possible manner, when the first device and the second device have accessed the second channel, the fourth information element may indicate that the second device needs to switch to the first channel. In this case, the fourth information element may also be at least one of the following: a CSA information element or a WBCS information element. Details are described below.

Manner 3: The fourth information element is the WBCS information element (denoted as a WBCS information element #2). The WBCS information element #2 may include channel identification information (denoted as channel identification information #5) or bandwidth information (denoted as bandwidth information #5). Optionally, the WBCS information element #1 may further include information element identification information (denoted as information element identification information #7).

The information element identification information #7 may also be used to identify the fourth information element. For example, the information element identification information #7 includes an EID #7 and an IE length #7. For specific implementation, refer to the foregoing information element identification information #1 for understanding. Details are not described again.

The bandwidth information #5 may indicate the bandwidth of the channel that needs to be switched to, for example, the bandwidth of the first channel. For example, the bandwidth information #5 may include a new bandwidth field, and the new bandwidth field may indicate the bandwidth of the second channel. For example, a value range of the new bandwidth field may be 0 to 255, and values 4 to 7 are used to indicate the bandwidth of the first channel, or any other possible value is used to indicate the bandwidth of the first channel.

The channel identification information #5 may indicate the channel that needs to be switched to, for example, the first channel. For example, the channel identification information #5 may include a new channel center frequency segment 0 field and a new channel center frequency segment 1 field. In this case, both the new channel center frequency segment 0 field and the new channel center frequency segment 1 field may indicate the channel number of the first channel.

In addition, a specific structure of the WBCS information element #2 may also be understood with reference to the foregoing Table 9. Details are not described again.

Manner 4: The fourth information element is the CSA information element (denoted as a CSA information element #2). The CSA information element #2 may include channel identification information (denoted as channel identification information #6), bandwidth information (denoted as bandwidth information #6), and a switch count (denoted as a switch count #4). Optionally, the CSA information element #2 may further include information element identification information (denoted as information element identification information #8) and switch mode information (denoted as switch mode information #2).

The information element identification information #8 may also be used to identify the fourth information element. For example, the information element identification information #8 includes an EID #8 and an IE length #8. For specific implementation, refer to the foregoing information element identification information #1 for understanding. Details are not described again.

The switch mode information #2 may indicate whether to continue data transmission before channel switching. For specific implementation, refer to the foregoing switch mode information #1 for understanding. Details are not described again.

The bandwidth information #6 may indicate the bandwidth of the channel that needs to be switched to, for example, the bandwidth of the first channel. For example, the bandwidth information #6 may include a new channel bandwidth field, and the new channel bandwidth field may indicate the bandwidth of the second channel. For example, values of the new channel bandwidth field are 4 to 7, to indicate the bandwidth of the first channel, or any other possible value is used to indicate the bandwidth of the first channel.

The channel identification information #6 may indicate the channel that needs to be switched to, for example, the first channel. For example, the channel identification information #6 may include a new channel number field. The new channel number field may indicate a channel number of a primary channel that needs to be switched to, for example, the channel number of the first channel.

The switch count #4 may indicate a moment of switching to the first channel. For example, the switch count #4 may also be specifically a channel switch count (denoted as a channel switch count #4). For specific implementation, refer to the foregoing channel switch count #2 for understanding. Details are not described again.

In addition, a specific structure of the CSA information element #2 may also be understood with reference to the foregoing Table 10. Details are not described again.

In this embodiment of this application, a CSA information element (for example, the CSA information element #1 or the CSA information element #2) and/or a WBCS information element (for example, the WBCS information element #1 or the WBCS information element #2) may be carried in a channel switch announcement frame (channel switch announcement frame, CSAF). In other words, the first device may indicate, by sending a channel switch announcement frame to the second device, the second device to switch to a corresponding channel. In addition, after sending the channel switch announcement frame, the first device may further switch to the corresponding channel. Correspondingly, after receiving the channel switch announcement frame, the second device may return acknowledgment information to the first device, where the acknowledgment information is denoted as acknowledgment information #2, to indicate that the second device has received the channel switch announcement frame. In addition, the second device may further switch to the corresponding channel based on the channel switch announcement frame. After both the first device and the second device switch to the corresponding channel, the two parties may transmit data on the channel. For example, when the first device and the second device switch to the first channel, the first device and the second device may transmit data on the first channel. For specific implementation, refer to the related content shown in FIG. 3. Details are not described again. Alternatively, when the first device and the second device switch to the second channel, the first device and the second device may transmit data on the second channel. For specific implementation, refer to IEEE P802.11-REVme™/D1.0, December 2021, Part 11. Details are not described again.

It may be understood that, generally, the channel identification information, the bandwidth information, and the switch count in the fourth information element may all be carried in one channel switch announcement frame, to improve transmission and channel switching efficiency. However, this is not limited. The information may alternatively be separately carried in a plurality of channel switch announcement frames, to improve transmission flexibility and channel switching flexibility. For example, the first device may first send, to the second device, a channel switch announcement frame #1 that carries the channel identification information. After confirming that the acknowledgment information #2 returned by the second device is received, the second device sends a channel switch announcement frame #2 that carries the bandwidth information and the switch count.

S603: The second device sends a fourth information element to the first device, and the first device receives the fourth information element from the second device.

A specific implementation of S603 is similar to the specific implementation of S602. Refer to the specific implementation of S602 for understanding. Details are not described again.

It may be understood that S602 and S603 are in an OR relationship. In other words, when switching from the frequency segment used by non-Wi-Fi to the frequency segment used by Wi-Fi is implemented in a unicast manner, that is, switching from the first channel to the second channel, or when switching from the frequency segment used by Wi-Fi to the frequency segment used by non-Wi-Fi is implemented in a unicast manner, that is, switching from the second channel to the first channel, the switching may be triggered by the second device, or may be triggered by the first device, to implement more flexible channel switching.

Optionally, with reference to the foregoing S601 to S603, after the first device switches to the corresponding channel, the first device may broadcast a beacon frame on the channel in a short periodicity, to quickly notify another device that the first device has switched to the corresponding channel. Similarly, after the second device switches to the corresponding channel, the second device sends a probe request frame to the first device, where the probe request frame is denoted as a probe request frame #2, to indicate that the second device has switched to the corresponding channel. Correspondingly, after the first device receives the probe request frame #2 from the second device, the first device may broadcast the beacon frame on the channel in a normal periodicity, to reduce overheads.

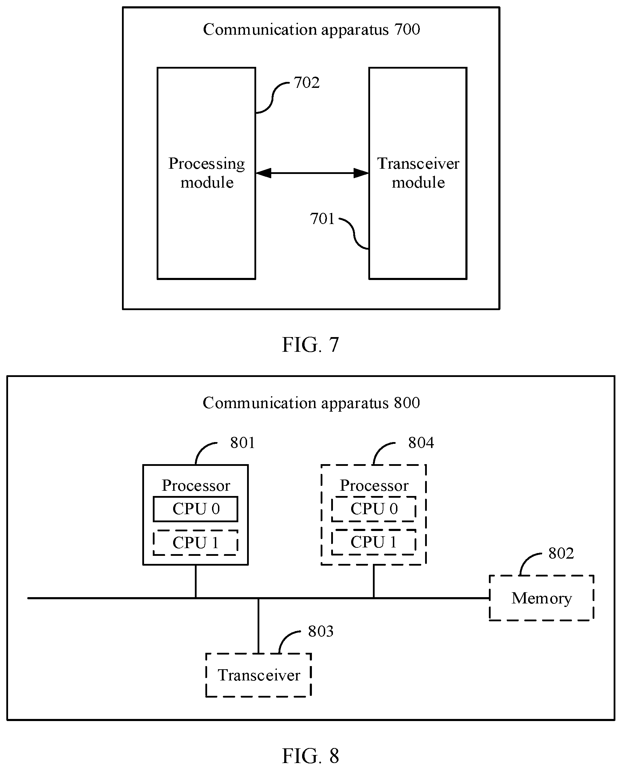

The foregoing describes, in detail with reference to FIG. 3 to FIG. 6, the communication methods provided in embodiments of this application. Communication apparatuses configured to perform the communication methods provided in embodiments of this application are described below in detail with reference to FIG. 7 and FIG. 8.

FIG. 7 is a diagram 1 of a structure of a communication apparatus according to an embodiment of this application. For example, as shown in FIG. 7, a communication apparatus 700 includes a transceiver module 701 and a processing module 702. For ease of description, FIG. 7 shows only main components of the communication apparatus.

In some embodiments, the communication apparatus 700 may be used in the communication system shown in FIG. 2, and perform functions of a first device in the methods shown in FIG. 3 to FIG. 6.

The transceiver module 701 is configured to indicate a transceiver function of the communication apparatus 700, and the processing module 702 is configured to perform a function of the communication apparatus 700 other than the transceiver function. For example, the processing module 702 is configured to obtain first data. The transceiver module 701 is configured to send the first data to a second device on a first channel in an unlicensed frequency band, where a frequency segment in which the first channel is located is a frequency segment other than a frequency segment used by wireless fidelity Wi-Fi in the unlicensed frequency band.

In a possible design solution, a bandwidth of the first channel is less than 20 MHz.

Optionally, the bandwidth of the first channel is any one of the following: 1 MHz, 5 MHz, 10 MHz, or 15 MHz.

For example, if the bandwidth of the first channel is 1 MHz or 5 MHz, the frequency segment in which the first channel is located is any one of the following: 5150 MHz to 5155 MHz, 5155 MHz to 5160 MHz, 5160 MHz to 5165 MHz, 5165 MHz to 5170 MHz, 5330 MHz to 5335 MHz, 5335 MHz to 5340 MHz, 5340 MHz to 5345 MHz, 5345 MHz to 5350 MHz, 5470 MHz to 5475 MHz, 5475 MHz to 5480 MHz, 5480 MHz to 5485 MHz, 5485 MHz to 5490 MHz, 5710 MHz to 5715 MHz, 5715 MHz to 5720 MHz, 5720 MHz to 5725 MHz, 5725 MHz to 5730 MHz, 5730 MHz to 5735 MHz, 5835 MHz to 5840 MHz, 5840 MHz to 5845 MHz, and 5845 MHz to 5850 MHz.

For another example, if the bandwidth of the first channel is 10 MHz, the frequency segment in which the first channel is located is any one of the following: 5150 MHz to 5160 MHz, 5155 MHz to 5165 MHz, 5160 MHz to 5170 MHz, 5330 MHz to 5340 MHz, 5335 MHz to 5345 MHz, 5340 MHz to 5350 MHz, 5470 MHz to 5480 MHz, 5480 MHz to 5490 MHz, 5710 MHz to 5720 MHz, 5715 MHz to 5725 MHz, 5720 MHz to 5730 MHz, 5725 MHz to 5735 MHz, 5835 MHz to 5845 MHz, and 5840 MHz to 5850 MHz.

For still another example, if the bandwidth of the first channel is 15 MHz, the frequency segment in which the first channel is located is any one of the following: 5150 MHz to 5165 MHz, 5155 MHz to 5170 MHz, 5330 MHz to 5345 MHz, 5335 MHz to 5350 MHz, 5470 MHz to 5485 MHz, 5475 MHz to 5490 MHz, 5710 MHz to 5725 MHz, 5715 MHz to 5730 MHz, 5720 MHz to 5735 MHz, and 5835 MHz to 5850 MHz.

In a possible design solution, the transceiver module 701 is further configured to broadcast a first information element by the communication apparatus 700, to receive a second information element returned by the second device for the first information element. The first information element indicates a channel supported by the communication apparatus 700, and the channel supported by the communication apparatus 700 includes the first channel. The second information element indicates that the second device requests to access the first channel.

Optionally, the transceiver module 701 is further configured to broadcast a third information element, where the third information element indicates that a device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Further, the third information element may include at least one of the following: channel identification information, bandwidth information, or a switch count. The channel identification information is used to identify the second channel, the bandwidth information indicates the bandwidth of the second channel, and the switch count indicates a moment of switching to the second channel.

Optionally, the transceiver module 701 is further configured to send a fourth information element to the second device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Alternatively, optionally, the transceiver module 701 is further configured to receive a fourth information element from the second device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Further, the fourth information element may include at least one of the following: channel identification information, bandwidth information, or a switch count. The channel identification information is used to identify the second channel, the bandwidth information indicates the bandwidth of the second channel, and the switch count indicates a moment of switching to the second channel.

Optionally, interference with the second channel is less than or equal to interference with the first channel, and/or a distance of transmission performed using the second channel is less than or equal to a distance of transmission performed using the first channel.

In a possible design solution, the transceiver module 701 is further configured to broadcast a first information element, to receive a second information element returned by the second device for the first information element. The first information element indicates a channel supported by the communication apparatus 700, the channel supported by the communication apparatus 700 includes a second channel in the unlicensed frequency band, a bandwidth of the second channel is different from the bandwidth of the first channel, a frequency segment in which the second channel is located is the frequency segment used by Wi-Fi in the unlicensed frequency band, and the second information element indicates that the second device requests to access the second channel.

Optionally, the transceiver module 701 is further configured to broadcast a third information element, where the third information element indicates that a device needs to switch to the first channel.

Further, the third information element may include at least one of the following: channel identification information, bandwidth information, or a switch count. The channel identification information is used to identify the first channel, the bandwidth information indicates the bandwidth of the first channel, and the switch count indicates a moment of switching to the first channel.

Optionally, the transceiver module 701 is further configured to send a fourth information element to the communication apparatus 700, where the fourth information element indicates that the communication apparatus 700 needs to switch to the first channel.

Alternatively, optionally, the transceiver module 701 is further configured to receive a fourth information element from the second device, where the fourth information element indicates that the communication apparatus 700 needs to switch to the first channel.

Further, the fourth information element may include at least one of the following: channel identification information, bandwidth information, or a switch count. The channel identification information is used to identify the first channel, the bandwidth information indicates the bandwidth of the first channel, and the switch count indicates the moment of switching to the first channel.

Optionally, interference with the second channel is greater than interference with the first channel, and/or a distance of transmission performed using the second channel is greater than a distance of transmission performed using the first channel.

In a possible design solution, the first information element is carried in a first beacon frame, and the first beacon frame is a frame sent in a broadcast manner.

In a possible design solution, the third information element is carried in a second beacon frame, and the second beacon frame is a frame sent in a broadcast manner.

In a possible design solution, the fourth information element is at least one of the following: a channel switch announcement CSA information element or a wideband channel switching WBCS information element, where the CSA information element and the WBCS information element are information elements sent in a unicast manner.

In a possible design solution, a bandwidth and a symbol of the first channel meet the following relationship: A narrower bandwidth of the first channel indicates a longer symbol of the first channel. For example, a quantity of subcarriers, a symbol, and a bandwidth of the first channel meet the following relationship:

$$\begin{cases} \alpha = \dfrac{BW_{wb}}{BW_{nb}} \\ CP = \alpha \times \gamma \times \dfrac{N_{sc}}{BW_{wb}} \\ OFDM_{wop} = \alpha \times \dfrac{N_{sc}}{BW_{wb}} \\ OFDM_{wp} = \alpha \times \left( \gamma \times \dfrac{N_{sc}}{BW_{wb}} + \dfrac{N_{sc}}{BW_{wb}} \right) \end{cases},$$

where

$BW_{wb}$ is a reference bandwidth, $BW_{nb}$ is the bandwidth of the first channel, the reference bandwidth is greater than the bandwidth of the first channel, $CP$ is a cyclic prefix, a value of $\gamma$ is greater than 0 and less than 1, $N_{sc}$ is the quantity of subcarriers on the first channel, $OFDM_{wop}$ indicates that the symbol of the first channel is a symbol that does not include the cyclic prefix, and $OFDM_{wp}$ indicates that the symbol of the first channel is a symbol that includes the cyclic prefix.

Optionally, the transceiver module 701 may include a sending module (not shown in FIG. 7) and a receiving module (not shown in FIG. 7). The sending module is configured to implement a sending function of the communication apparatus 700, and the receiving module is configured to implement a receiving function of the communication apparatus 700.

Optionally, the communication apparatus 700 may further include a storage module (not shown in FIG. 7), and the storage module stores a program or instructions. When the processing module 702 executes the program or the instructions, the communication apparatus 700 is enabled to perform the functions of the first device in the methods shown in FIG. 3 to FIG. 6.

It may be understood that the communication apparatus 700 may be a terminal or a network device, may be a chip (system) or another part or component that may be disposed in a terminal or a network device, or may be an apparatus that includes a terminal or a network device. This is not limited in this application.

In addition, for technical effect of the communication apparatus 700, refer to the technical effect of the communication methods shown in FIG. 3 to FIG. 6. Details are not described herein again.

In some embodiments, the communication apparatus 700 may be used in the communication system shown in FIG. 2, and perform functions of a second device in the methods shown in FIG. 3 to FIG. 6.

The transceiver module 701 is configured to indicate a transceiver function of the communication apparatus 700, and the processing module 702 is configured to perform a function of the communication apparatus 700 other than the transceiver function. For example, the transceiver module 701 is configured to receive first data from a first device on a first channel in an unlicensed frequency band. The processing module 702 is configured to process the first data. A frequency segment in which the first channel is located is a frequency segment other than a frequency segment used by wireless fidelity Wi-Fi in the unlicensed frequency band.

In a possible design solution, a bandwidth of the first channel is less than 20 MHz.

Optionally, the bandwidth of the first channel is any one of the following: 1 MHz, 5 MHz, 10 MHz, or 15 MHz.

For example, if the bandwidth of the first channel is 1 MHz or 5 MHz, the frequency segment in which the first channel is located is any one of the following: 5150 MHz to 5155 MHz, 5155 MHz to 5160 MHz, 5160 MHz to 5165 MHz, 5165 MHz to 5170 MHz, 5330 MHz to 5335 MHz, 5335 MHz to 5340 MHz, 5340 MHz to 5345 MHz, 5345 MHz to 5350 MHz, 5470 MHz to 5475 MHz, 5475 MHz to 5480 MHz, 5480 MHz to 5485 MHz, 5485 MHz to 5490 MHz, 5710 MHz to 5715 MHz, 5715 MHz to 5720 MHz, 5720 MHz to 5725 MHz, 5725 MHz to 5730 MHz, 5730 MHz to 5735 MHz, 5835 MHz to 5840 MHz, 5840 MHz to 5845 MHz, and 5845 MHz to 5850 MHz.

For another example, if the bandwidth of the first channel is 10 MHz, the frequency segment in which the first channel is located is any one of the following: 5150 MHz to 5160 MHz, 5155 MHz to 5165 MHz, 5160 MHz to 5170 MHz, 5330 MHz to 5340 MHz, 5335 MHz to 5345 MHz, 5340 MHz to 5350 MHz, 5470 MHz to 5480 MHz, 5480 MHz to 5490 MHz, 5710 MHz to 5720 MHz, 5715 MHz to 5725 MHz, 5720 MHz to 5730 MHz, 5725 MHz to 5735 MHz, 5835 MHz to 5845 MHz, and 5840 MHz to 5850 MHz.

For still another example, if the bandwidth of the first channel is 15 MHz, the frequency segment in which the first channel is located is any one of the following: 5150 MHz to 5165 MHz, 5155 MHz to 5170 MHz, 5330 MHz to 5345 MHz, 5335 MHz to 5350 MHz, 5470 MHz to 5485 MHz, 5475 MHz to 5490 MHz, 5710 MHz to 5725 MHz, 5715 MHz to 5730 MHz, 5720 MHz to 5735 MHz, and 5835 MHz to 5850 MHz.

In a possible design solution, the transceiver module 701 is further configured to receive a first information element, and the processing module 702 is further configured to control, based on the first information element, the transceiver module 701 to send a second information element to the first device. The first information element indicates a channel supported by the first device, and the channel supported by the first device includes the first channel. The second information element indicates that the second device requests to access the first channel.

Optionally, the transceiver module 701 is further configured to receive a third information element, where the third information element indicates that a device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Further, the third information element may include at least one of the following: channel identification information, bandwidth information, or a switch count. The channel identification information is used to identify the second channel, the bandwidth information indicates the bandwidth of the second channel, and the switch count indicates a moment of switching to the second channel.

Optionally, the transceiver module 701 is further configured to receive a fourth information element from the first device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Alternatively, optionally, the transceiver module 701 is further configured to send a fourth information element to the first device, where the fourth information element indicates that the second device needs to switch to a second channel in the unlicensed frequency band, a bandwidth of the second channel is different from the bandwidth of the first channel, and a frequency segment in which the second channel is located is the frequency segment used by Wi-Fi in the unlicensed frequency band.

Further, the fourth information element may include at least one of the following: channel identification information, bandwidth information, or a switch count. The channel identification information is used to identify the second channel, the bandwidth information indicates the bandwidth of the second channel, and the switch count indicates a moment of switching to the second channel.

Optionally, interference with the second channel is less than or equal to interference with the first channel, and/or a distance of transmission performed using the second channel is less than or equal to a distance of transmission performed using the first channel.

In a possible design solution, the transceiver module 701 is further configured to receive a first information element, and the processing module 702 is further configured to control, based on the first information element, the transceiver module 701 to send a second information element to the first device. The first information element is used for a channel supported by the first device, the channel supported by the first device includes a second channel in the unlicensed frequency band, a bandwidth of the second channel is different from the bandwidth of the first channel, a frequency segment in which the second channel is located is the frequency segment used by Wi-Fi in the unlicensed frequency band, and the second channel is used to indicate that the second device requests to access the second channel.

Optionally, the transceiver module 701 is further configured to receive a third information element, where the third information element indicates that a device needs to switch to the first channel.

Further, the third information element may include at least one of the following: channel identification information, bandwidth information, or a switch count. The channel identification information is used to identify the first channel, the bandwidth information indicates the bandwidth of the first channel, and the switch count indicates a moment of switching to the first channel.

Optionally, the transceiver module 701 is further configured to receive a fourth information element from the first device, where the fourth information element indicates that the first device needs to switch to the first channel.

Alternatively, optionally, the transceiver module 701 is further configured to send a fourth information element to the first device, where the fourth information element indicates that the first device needs to switch to the first channel.

Further, the fourth information element may include at least one of the following: channel identification information, bandwidth information, or a switch count. The channel identification information is used to identify the first channel, the bandwidth information indicates the bandwidth of the first channel, and the switch count indicates the moment of switching to the first channel.

Optionally, interference with the second channel is greater than interference with the first channel, and/or a distance of transmission performed using the second channel is greater than a distance of transmission performed using the first channel.

In a possible design solution, the first information element is carried in a first beacon frame, and the first beacon frame is a frame sent in a broadcast manner.

In a possible design solution, the third information element is carried in a second beacon frame, and the second beacon frame is a frame sent in a broadcast manner.

In a possible design solution, the fourth information element is at least one of the following: a channel switch announcement CSA information element or a wideband channel switching WBCS information element, where the CSA information element and the WBCS information element are information elements sent in a unicast manner.

In a possible design solution, a bandwidth and a symbol of the first channel meet the following relationship: A narrower bandwidth of the first channel indicates a longer symbol of the first channel. For example, a quantity of subcarriers, a symbol, and a bandwidth of the first channel meet the following relationship:

$$
\begin{cases}
\alpha = \dfrac{BW_{wb}}{BW_{nb}} \\[2mm]
CP = \alpha \times \gamma \times \dfrac{N_{sc}}{BW_{wb}} \\[2mm]
OFDM_{wop} = \alpha \times \dfrac{N_{sc}}{BW_{wb}} \\[2mm]
OFDM_{wp} = \alpha \times \left( \gamma \times \dfrac{N_{sc}}{BW_{wb}} + \dfrac{N_{sc}}{BW_{wb}} \right)
\end{cases}
,
$$

where

$BW_{wb}$ is a reference bandwidth, $BW_{nb}$ is the bandwidth of the first channel, the reference bandwidth is greater than the bandwidth of the first channel, $CP$ is a cyclic prefix, a value of $y$ is greater than 0 and less than 1, $N_{sc}$ is the quantity of subcarriers on the first channel, $OFDM_{wop}$ indicates that the symbol of the first channel is a symbol that does not include the cyclic prefix, and $OFDM_{wp}$ indicates that the symbol of the first channel is a symbol that includes the cyclic prefix.

Optionally, the transceiver module 701 may include a sending module (not shown in FIG. 7) and a receiving module (not shown in FIG. 7). The sending module is configured to implement a sending function of the communication apparatus 700, and the receiving module is configured to implement a receiving function of the communication apparatus 700.

Optionally, the communication apparatus 700 may further include a storage module (not shown in FIG. 7), and the storage module stores a program or instructions. When the processing module 702 executes the program or the instructions, the communication apparatus 700 is enabled to perform the functions of the second device in the methods shown in FIG. 3 to FIG. 6.

It may be understood that the communication apparatus 700 may be a terminal or a network device, may be a chip (system) or another part or component that may be disposed in a terminal or a network device, or may be an apparatus that includes a terminal or a network device. This is not limited in this application.

In addition, for technical effect of the communication apparatus 700, refer to the technical effect of the communication methods shown in FIG. 3 to FIG. 6. Details are not described herein again.

FIG. 8 is a diagram 2 of a structure of a communication apparatus according to an embodiment of this application. For example, the communication apparatus may be a terminal, or may be a chip (system) or another part or component that may be disposed in a terminal. As shown in FIG. 8, a communication apparatus 800 may include a processor 801. Optionally, the communication apparatus 800 may further include a memory 802 and/or a transceiver 803. The processor 801, the memory 802, and the transceiver 803 are coupled, for example, may be connected through a communication bus.

The following describes each component of the communication apparatus 800 in detail with reference to FIG. 8.

The processor 801 is a control center of the communication apparatus 800, and may be a processor, or may be a generic term of a plurality of processing elements. For example, the processor 801 is one or more central processing units (central processing unit, CPU), or may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

Optionally, the processor 801 may perform various functions of the communication apparatus 800 by running or executing a software program stored in the memory 802 and invoking data stored in the memory 802, for example, perform the communication methods shown in FIG. 3 to FIG. 6.

During specific implementation, in an embodiment, the processor 801 may include one or more CPUs, for example, a CPU 0 and a CPU 1 in FIG. 8.

During specific implementation, in an embodiment, the communication apparatus 800 may alternatively include a plurality of processors, for example, the processor 801 and a processor 804 shown in FIG. 8. Each of the processors may be a single-core processor (single-CPU), or may be a multi-core processor (multi-CPU). The processor herein may be one or more devices, circuits, and/or processing cores configured to process data (for example, computer program instructions).

The memory 802 is configured to store a software program for executing the solution of this application, and the processor 801 controls execution of the software program. For a specific implementation, refer to the foregoing method embodiments. Details are not described herein again.

Optionally, the memory 802 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. This is not limited thereto. The memory 802 may be integrated with the processor 801, or may exist independently, and is coupled to the processor 801 through an interface circuit (not shown in FIG. 8) in the communication apparatus 800. This is not specifically limited in embodiments of this application.

The transceiver 803 is configured to communicate with another communication apparatus. For example, the communication apparatus 800 is a terminal, and the transceiver 803 may be configured to communicate with a network device or communicate with another terminal device. For another example, the communication apparatus 800 is a network device, and the transceiver 803 may be configured to communicate with a terminal or communicate with another network device.

Optionally, the transceiver 803 may include a receiver and a transmitter (not separately shown in FIG. 8). The receiver is configured to implement a receiving function, and the transmitter is configured to implement a sending function.

Optionally, the transceiver 803 may be integrated with the processor 801, or may exist independently, and is coupled to the processor 801 through an interface circuit (not shown in FIG. 8) in the communication apparatus 800. This is not specifically limited in embodiments of this application.

It may be understood that a structure of the communication apparatus 800 shown in FIG. 8 does not constitute a limitation on the communication apparatus. An actual communication apparatus may include more or fewer parts than those shown in the figure, or combine some parts, or have different part arrangement.

In addition, for technical effect of the communication apparatus 800, refer to the technical effect of the method in the foregoing method embodiments. Details are not described herein again.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

    obtaining, by a first device, first data; and
    sending, by the first device, the first data to a second device on a first channel in an unlicensed frequency band, wherein a frequency segment in which the first channel is located is a frequency segment other than a frequency segment used by wireless fidelity Wi-Fi in the unlicensed frequency band.

2. The method according to claim 1, wherein the method further comprises:

    broadcasting, by the first device, a first information element, wherein the first information element is used for a channel supported by the first device, and the channel supported by the first device comprises the first channel; and
    receiving, by the first device, a second information element returned by the second device for the first information element, wherein the second information element indicates that the second device requests to access the first channel.

3. The method according to claim 2, wherein the method further comprises:
    broadcasting, by the first device, a third information element, wherein the third information element indicates that a device needs to switch to a second channel in the unlicensed frequency band, a bandwidth of the second channel is different from a bandwidth of the first channel, and a frequency segment in which the second channel is located is the frequency segment used by Wi-Fi in the unlicensed frequency band.

4. The method according to claim 2, wherein the method further comprises:
    sending, by the first device, a fourth information element to the second device, wherein the fourth information element indicates that the second device needs to switch to a second channel in the unlicensed frequency band, a bandwidth of the second channel is different from a bandwidth of the first channel, and a frequency segment in which the second channel is located is the frequency segment used by Wi-Fi in the unlicensed frequency band.

5. The method according to claim 2, wherein the method further comprises:
    receiving, by the first device, a fourth information element from the second device, wherein the fourth information element indicates that the second device needs to switch to a second channel in the unlicensed frequency band, a bandwidth of the second channel is different from a bandwidth of the first channel, and a frequency segment in which the second channel is located is the frequency segment used by Wi-Fi in the unlicensed frequency band.

6. The method according to claim 1, wherein the method further comprises:

    broadcasting, by the first device, a first information element, wherein the first information element indicates a channel supported by the first device, the channel supported by the first device comprises a second channel in the unlicensed frequency band, a bandwidth of the second channel is different from a bandwidth of the first channel, and a frequency segment in which the second channel is located is the frequency segment used by Wi-Fi in the unlicensed frequency band; and
    receiving, by the first device, a second information element returned by the second device for the first information element, wherein the second information element indicates that the second device requests to access the second channel.

7. The method according to claim 6, wherein the method further comprises:
broadcasting, by the first device, a third information element, wherein the third information element indicates that a device needs to switch to the first channel.

8. The method according to claim 6, wherein the method further comprises:
sending, by the first device, a fourth information element to the first device, wherein the fourth information element indicates that the first device needs to switch to the first channel.

9. The method according to claim 6, wherein the method further comprises:
receiving, by the first device, a fourth information element from the second device, wherein the fourth information element indicates that the first device needs to switch to the first channel.

10. A communication method, wherein the method comprises:

receiving, by a second device, first data from a first device on a first channel in an unlicensed frequency band, wherein a frequency segment in which the first channel is located is a frequency segment other than a frequency segment used by wireless fidelity Wi-Fi in the unlicensed frequency band; and
processing, by the second device, the first data.

11. The method according to claim 10, wherein the method further comprises:

receiving, by the second device, a first information element, wherein the first information element is used for a channel supported by the first device, and the channel supported by the first device comprises the first channel; and
sending, by the second device, a second information element to the first device based on the first information element, wherein the second information element indicates that the second device requests to access the first channel.

12. The method according to claim 11, wherein the method further comprises:
receiving, by the second device, a third information element, wherein the third information element indicates that a device needs to switch to a second channel in the unlicensed frequency band, a bandwidth of the second channel is different from a bandwidth of the first channel, and a frequency segment in which the second channel is located is the frequency segment used by Wi-Fi in the unlicensed frequency band.

13. The method according to claim 3 or 12, wherein the third information element comprises at least one of the following: channel identification information, bandwidth information, or a switch count, wherein the channel identification information is used to identify the second channel, the bandwidth information indicates the bandwidth of the second channel, and the switch count indicates a moment of switching to the second channel.

14. The method according to claim 11, wherein the method further comprises:
receiving, by the second device, a fourth information element from the first device, wherein the fourth information element indicates that the second device needs to switch to a second channel in the unlicensed frequency band, a bandwidth of the second channel is different from a bandwidth of the first channel, and a frequency segment in which the second channel is located is the frequency segment used by Wi-Fi in the unlicensed frequency band.

15. The method according to claim 11, wherein the method further comprises:
sending, by the second device, a fourth information element to the first device, wherein the fourth information element indicates that the second device needs to switch to a second channel in the unlicensed frequency band, a bandwidth of the second channel is different from a bandwidth of the first channel, and a frequency segment in which the second channel is located is the frequency segment used by Wi-Fi in the unlicensed frequency band.

16. The method according to claim 4, 5, 14, or 15, wherein the fourth information element comprises at least one of the following: channel identification information, bandwidth information, or a switch count, wherein the channel identification information is used to identify the second channel, the bandwidth information indicates the bandwidth of the second channel, and the switch count indicates a moment of switching to the second channel.

17. The method according to any one of claims 3 to 5 and 12 to 16, wherein interference with the second channel is less than or equal to interference with the first channel, and/or a distance of transmission performed using the second channel is less than or equal to a distance of transmission performed using the first channel.

18. The method according to claim 10, wherein the method further comprises:

receiving, by the second device, a first information element, wherein the first information element indicates a channel supported by the first device, the channel supported by the first device comprises a second channel in the unlicensed frequency band, a bandwidth of the second channel is different from a bandwidth of the first channel, and a frequency segment in which the second channel is located is the frequency segment used by Wi-Fi in the unlicensed frequency band; and

sending, by the second device, a second information element to the first device based on the first information element, wherein the second information element indicates that the second device requests to access the second channel.

19. The method according to claim 18, wherein the method further comprises:
receiving, by the second device, a third information element, wherein the third information element indicates that a device needs to switch to the first channel.

20. The method according to claim 7 or 19, wherein the third information element comprises at least one of the following: channel identification information, bandwidth information, or a switch count, wherein the channel identification information is used to identify the first channel, the bandwidth information indicates the bandwidth of the first channel, and the switch count indicates a moment of switching to the first channel.

21. The method according to claim 20, wherein the method further comprises:
receiving, by the second device, a fourth information element from the first device, wherein the fourth information element indicates that the first device needs to switch to the first channel.

22. The method according to claim 20, wherein the method further comprises:
sending, by the second device, a fourth information element to the first device, wherein the fourth information element indicates that the first device needs to switch to the first channel.

23. The method according to claim 8, 9, 21, or 22, wherein the fourth information element comprises at least one of the following: channel identification information, bandwidth information, or a switch count, wherein the channel identification information is used to identify the first channel, the bandwidth information indicates the bandwidth of the first channel, and the switch count indicates the moment of switching to the first channel.

24. The method according to any one of claims 6 to 9 and 18 to 23, wherein interference with the second channel is greater than interference with the first channel, and/or a distance of transmission performed using the second channel is greater than a distance of transmission performed using the first channel.

25. The method according to any one of claims 2 to 9 and 11 to 24, wherein the first information element is carried in a first beacon frame, and the first beacon frame is a frame sent in a broadcast manner.

26. The method according to claim 3, 7, 12, 13, 19, or 20, wherein the third information element is carried in a second beacon frame, and the second beacon frame is a frame sent in a broadcast manner.

27. The method according to any one of claims 4, 5, 8, 9, 14 to 16, and 21 to 23, wherein the fourth information element is at least one of the following: a channel switch announcement CSA information element or a wideband channel switching WBCS information element, wherein the CSA information element and the WBCS information element are information elements sent in a unicast manner.

28. The method according to any one of claims 1 to 17, wherein the bandwidth of the first channel is less than 20 MHz.

29. The method according to claim 28, wherein the bandwidth of the first channel is any one of the following: 1 MHz, 5 MHz, 10 MHz, or 15 MHz.

30. The method according to claim 29, wherein if the bandwidth of the first channel is 1 MHz or 5 MHz, the frequency segment in which the first channel is located is any one of the following: 5150 MHz to 5155 MHz, 5155 MHz to 5160 MHz, 5160 MHz to 5165 MHz, 5165 MHz to 5170 MHz, 5330 MHz to 5335 MHz, 5335 MHz to 5340 MHz, 5340 MHz to 5345 MHz, 5345 MHz to 5350 MHz, 5470 MHz to 5475 MHz, 5475 MHz to 5480 MHz, 5480 MHz to 5485 MHz, 5485 MHz to 5490 MHz, 5710 MHz to 5715 MHz, 5715 MHz to 5720 MHz, 5720 MHz to 5725 MHz, 5725 MHz to 5730 MHz, 5730 MHz to 5735 MHz, 5835 MHz to 5840 MHz, 5840 MHz to 5845 MHz, and 5845 MHz to 5850 MHz.

31. The method according to claim 29, wherein if the bandwidth of the first channel is 10 MHz, the frequency segment in which the first channel is located is any one of the following: 5150 MHz to 5160 MHz, 5155 MHz to 5165 MHz, 5160 MHz to 5170 MHz, 5330 MHz to 5340 MHz, 5335 MHz to 5345 MHz, 5340 MHz to 5350 MHz, 5470 MHz to 5480 MHz, 5480 MHz to 5490 MHz, 5710 MHz to 5720 MHz, 5715 MHz to 5725 MHz, 5720 MHz to 5730 MHz, 5725 MHz to 5735 MHz, 5835 MHz to 5845 MHz, and 5840 MHz to 5850 MHz.

32. The method according to claim 29, wherein if the bandwidth of the first channel is 15 MHz, the frequency segment in which the first channel is located is any one of the following: 5150 MHz to 5165 MHz, 5155 MHz to 5170 MHz, 5330 MHz to 5345 MHz, 5335 MHz to 5350 MHz, 5470 MHz to 5485 MHz, 5475 MHz to 5490 MHz, 5710 MHz to 5725 MHz, 5715 MHz to 5730 MHz, 5720 MHz to 5735 MHz, and 5835 MHz to 5850 MHz.

33. The method according to any one of claims 1 to 32, wherein a bandwidth and a symbol of the first channel meet the following relationship: a narrower bandwidth of the first channel indicates a longer symbol of the first channel.

34. The method according to claim 33, wherein a quantity of subcarriers, a symbol, and a bandwidth of the first channel meet the following relationship:

$$\begin{cases} \alpha = \dfrac{BW_{wb}}{BW_{nb}} \\ CP = \alpha \times \gamma \times \dfrac{N_{sc}}{BW_{wb}} \\ OFDM_{wop} = \alpha \times \dfrac{N_{sc}}{BW_{wb}} \\ OFDM_{wp} = \alpha \times \left( \gamma \times \dfrac{N_{sc}}{BW_{wb}} + \dfrac{N_{sc}}{BW_{wb}} \right) \end{cases},$$

wherein
$BW_{wb}$ is a reference bandwidth, $BW_{nb}$ is the bandwidth of the first channel, the reference bandwidth is greater than the bandwidth of the first channel, $CP$ is a cyclic prefix, a value of $y$ is greater than 0 and less than 1, $N_{sc}$ is the quantity of subcarriers on the first channel, $OFDM_{wop}$ indicates that the symbol of the first channel is a symbol that does not comprise the cyclic prefix, and $OFDM_{wp}$ indicates that the symbol of the first channel is a symbol that comprises the cyclic prefix.

35. A communication apparatus, wherein the apparatus comprises a module configured to perform the method according to any one of claims 1 to 9.

36. A communication apparatus, wherein the apparatus comprises a module configured to perform the method according to any one of claims 10 to 34.

37. A communication apparatus, wherein the communication apparatus comprises a processor, the processor is coupled to a memory, the memory is configured to store computer instructions, and when the processor executes the instructions, the communication apparatus is enabled to perform the method according to any one of claims 1 to 34.

38. A communication system, wherein the communication system comprises a first device configured to perform the method according to any one of claims 1 to 9, and a second device configured to perform the method according to any one of claims 10 to 34.

39. A computer-readable storage medium, wherein the computer-readable storage medium comprises a computer program or instructions, and when the computer program or the instructions are run on a computer, the computer is enabled to perform the method according to any one of claims 1 to 34.

Non-HT: L-STF (8 μs), L-LTF (8 μs), L-SIG (4 μs), Data

HT: L-STF (8 μs), L-LTF (8 μs), L-SIG (4 μs), HT-SIG (8 μs), HT-STF (4 μs), HT-LTF (4 μs), Data

VHT: L-STF (8 μs), L-LTF (8 μs), L-SIG (4 μs), VHT-SIG-A (8 μs), VHT-STF (4 μs), VHT-LTF (4 μs), VHT-SIG-B (4 μs), Data

FIG. 1

```
┌──────────────┐                 ┌──────────────┐
│ First device │◄───────────────►│ Second device│
└──────────────┘                 └──────────────┘
```

FIG. 2

```
┌──────────────┐                          ┌──────────────┐
│ First device │                          │ Second device│
└──────┬───────┘                          └──────┬───────┘
       │                                         │
┌──────┴─────────────────┐                       │
│ S301: The first device │                       │
│   obtains first data   │                       │
└──────┬─────────────────┘                       │
       │                                         │
┌──────┴──────────────────────────────────────────────────────┐
│ S302: The first device sends the first data to the second    │
│ device on a first channel in an unlicensed frequency band,    │
│ and the second device receives the first data from the first  │
│ device on the first channel in the unlicensed frequency band  │
└──────┬────────────────────────────────────┬─────────────────┘
       │                                     │
       │                      ┌──────────────┴──────────┐
       │                      │ S303: The second device │
       │                      │  processes the first data│
       │                      └──────────────┬──────────┘
       │                                     │
```

FIG. 3

| Frequency segment #1 | 5150 | | | | |
|---|---|---|---|---|---|
| | 5155 | | | | |
| | 5160 | | | | |
| | 5165 | | | | |
| | 5170 | | | | |
| | 5180 | 36 | 36 | 36 | 36 |
| | 5190 | | | | |
| | 5200 | 40 | | | |
| | 5210 | | | | |
| | 5220 | 44 | 44 | | |
| | 5230 | | | | |
| | 5240 | 48 | | | |
| | 5250 | | | | |
| | 5260 | 52 | 52 | 52 | |
| | 5270 | | | | |
| | 5280 | 56 | | | |
| | 5290 | | | | |
| | 5300 | 60 | 60 | | |
| | 5310 | | | | |
| | 5320 | 64 | | | |
| | 5330 | | | | |
| | 5335 | | | | |
| | 5340 | | | | |
| | 5345 | | | | |
| | 5350 | | | | |

FIG. 4(a)

| Frequency segment #2 | 5725 | | | |
| | 5730 | | | |
| | 5735 | | | |
| | 5745 | | | |
| | 5755 | 149 | 149 | 149 |
| | 5765 | | | |
| | 5775 | 153 | | |
| | 5785 | | | |
| | 5795 | 157 | | |
| | 5805 | | 157 | |
| | 5815 | 161 | | |
| | 5825 | | | |
| | 5835 | 165 | | |
| | 5840 | | | |
| | 5845 | | | |
| | 5850 | | | |

FIG. 4(b)

| | | | | | |
|---|---|---|---|---|---|
| Frequency segment #3 | 5470 | | | | |
| | 5475 | | | | |
| | 5480 | | | | |
| | 5485 | | | | |
| | 5490 | | | | |
| | 5500 | 100 | 100 | 100 | 100 |
| | 5510 | | | | |
| | 5520 | 104 | | | |
| | 5530 | | | | |
| | 5540 | 108 | 108 | | |
| | 5550 | | | | |
| | 5560 | 112 | | | |
| | 5570 | | | | |
| | 5580 | 116 | 116 | 116 | |
| | 5590 | | | | |
| | 5600 | 120 | | | |
| | 5610 | | | | |
| | 5620 | 124 | 124 | | |
| | 5630 | | | | |
| | 5640 | 128 | | | |
| | 5650 | | | | |
| | 5660 | 132 | 132 | | |
| | 5670 | | | | |
| | 5680 | 136 | | | |
| | 5690 | | | | |
| | 5700 | 140 | | | |
| | 5710 | | | | |
| | 5715 | | | | |
| | 5720 | | | | |
| | 5725 | | | | |

FIG. 4(c)

```
┌─────────────┐          ┌──────────────┐
│ First device │          │ Second device │
└─────────────┘          └──────────────┘
       │                         │
┌──────┴─────────────────────────┴──────┐
│ S501: The first device broadcasts a first information element, and │
│    the second device receives the first information element        │
└──────┬─────────────────────────┬──────┘
       │                         │
       │   S502: Second          │
       │   information element    │
       │◄────────────────────────│
       │                         │
```

FIG. 5

```
┌─────────────┐          ┌──────────────┐
│ First device │          │ Second device │
└─────────────┘          └──────────────┘
       │                         │
┌ ─ ─ ─┴ ─ ─ ─ ─ ─ ─ ─ ─ ─ ─ ─ ─┴ ─ ─ ┐
│ S601: The first device broadcasts a third information element, and │
│    the second device receives the third information element        │
└ ─ ─ ─┬ ─ ─ ─ ─ ─ ─ ─ ─ ─ ─ ─ ─┬ ─ ─ ┘
       │                         │
       │   S602: Fourth          │
       │   information element    │
       │─ ─ ─ ─ ─ ─ ─ ─ ─ ─ ─ ─►│
       │   S603: Fourth          │
       │   information element    │
       │◄─ ─ ─ ─ ─ ─ ─ ─ ─ ─ ─ ─│
       │                         │
```

FIG. 6

Communication apparatus 700

702

Processing
module

Transceiver
module

701

FIG. 7

Communication apparatus 800

801

Processor

CPU 0

CPU 1

804

Processor

CPU 0

CPU 1

802

Memory

803

Transceiver

FIG. 8

## INTERNATIONAL SEARCH REPORT

| | International application No. |
|---|---|
| | **PCT/CN2023/131255** |

### A. CLASSIFICATION OF SUBJECT MATTER

H04W72/0453(2023.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, DWPI, 3GPP: 非授权频谱, 未授权频谱, 信道, WIFI, 无线保真, 提高, 频谱, 利用率, 排除, unlicensed, channel, increase, advance, frequency, utilization, exclude

### C. DOCUMENTS CONSIDERED TO BE RELEVANT

| Category* | Citation of document, with indication, where appropriate, of the relevant passages | Relevant to claim No. |
|---|---|---|
| X | WO 2016082216 A1 (HUAWEI TECHNOLOGIES CO., LTD.) 02 June 2016 (2016-06-02) description, page 11, line 1-page 12, line 5, and figure 2 | 1-39 |
| A | WO 2020150957 A1 (GUANGDONG OPPO MOBILE TELECOMMUNICATIONS CORP., LTD.) 30 July 2020 (2020-07-30) entire document | 1-39 |
| A | CN 113473622 A (HONOR TERMINAL CO., LTD.) 01 October 2021 (2021-10-01) entire document | 1-39 |
| A | CN 113853016 A (HUAWEI TECHNOLOGIES CO., LTD.) 28 December 2021 (2021-12-28) entire document | 1-39 |
| A | CN 113873650 A (HUAWEI TECHNOLOGIES CO., LTD.) 31 December 2021 (2021-12-31) entire document | 1-39 |
| A | HUAWEI et al. "Support of flexible bandwidth" *3GPP TSG RAN WG1 Meeting #86 R1-166106*, 26 August 2016 (2016-08-26), entire document | 1-39 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 January 2024** | **17 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/131255**

| Patent document cited in search report | | | Publication date (day/month/year) | Patent family member(s) | | | Publication date (day/month/year) |
|---|---|---|---|---|---|---|---|
| WO | 2016082216 | A1 | 02 June 2016 | CN | 107079300 | A | 18 August 2017 |
| WO | 2020150957 | A1 | 30 July 2020 | CN | 111869292 | A | 30 October 2020 |
| CN | 113473622 | A | 01 October 2021 | WO | 2022267690 | A1 | 29 December 2022 |
| | | | | EP | 4207910 | A1 | 05 July 2023 |
| CN | 113853016 | A | 28 December 2021 | WO | 2022001145 | A1 | 06 January 2022 |
| | | | | EP | 4161197 | A1 | 05 April 2023 |
| CN | 113873650 | A | 31 December 2021 | WO | 2022001144 | A1 | 06 January 2022 |
| | | | | EP | 4161193 | A1 | 05 April 2023 |

Form PCT/ISA/210 (patent family annex) (July 2022)

**EP 4 615 108 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211538153